# EUROPEAN PATENT SPECIFICATION

(11) **EP 3 722 862 B1**
(45) Date of publication and mention of the grant of the patent: **13.08.2025**
(21) Application number: 18886962.2
(22) Date of filing: 07.12.2018
(51) Int. Cl.: G02B 26/10, G02B 26/08, G01S 7/481, G01S 17/93

(54) **LASER RADAR SYSTEM AND CONTROL METHOD THEREOF, METHOD OF OBTAINING SCANNING ANGLE, AND VEHICLE**
LASERRADARSYSTEM UND STEUERUNGSVERFAHREN DAFÜR, VERFAHREN ZUM ERHALTEN EINES ABTASTWINKELS UND FAHRZEUG
SYSTÈME RADAR LASER ET SON PROCÉDÉ DE COMMANDE, PROCÉDÉ D'OBTENTION D'UN ANGLE DE BALAYAGE, ET VÉHICULE

(30) Priority: 08.12.2017 CN 201711303151; 29.06.2018 CN 201810704708; 29.06.2018 CN 201821028783 U; 29.06.2018 CN 201821028784 U
(43) Date of publication of application: 14.10.2020
(73) Proprietor: Hesai Technology Co., Ltd., Shanghai (CN)
(72) Inventor: YE, Liangchen, Shanghai 201821 (CN); WU, Shixiang, Shanghai 201821 (CN); XIANG, Shaoqing, Shanghai 201821 (CN); MAO, Shengping, Shanghai 201821 (CN); ZHANG, Zixia, Shanghai 201821 (CN); LI, Yifan, Shanghai 201821 (CN)
(74) Representative: Appelt, Christian W.
(86) International application number: PCT/CN2018/119684
(87) International publication number: WO 2019/109993

(56) References cited:
- CN-A- 103 954 971
- CN-A- 106 526 573
- CN-A- 107 153 184
- CN-A- 107 153 184
- CN-A- 108 594 206
- CN-U- 206 039 040
- JP-A- 2013 205 095
- JP-A- 2014 071 027
- JP-B2- 5 929 675
- JP-B2- 6 036 116
- US-A1- 2009 002 678
- US-A1- 2016 282 468

## Description

### BACKGROUND

### Technical Field

The present invention relates to the field of laser detection technologies, and in particular, to a lidar system and a control method thereof, a method for obtaining a scanning angle, and a vehicle.

### Related Art

A lidar is a radar system that transmits a laser beam to detect characteristic parameters such as a location and a speed, and is an advanced detection means that combines laser technology with photodetection technology. Due to its high resolution, high concealment performance, high anti-interference capability, high performance of low-altitude detection, small size, and light weight, the lidar is widely applied to autonomous driving, traffic communications, unmanned aerial vehicles, smart robots, energy safety inspection, resource exploration, and other fields, and has provided extremely important original data for national economy, social development, and scientific research, and has demonstrated promising application prospects.

In the autonomous driving field, the lidar needs to achieve the performances such as small size, high reliability, high imaging frame frequency, high resolution, and long-distance ranging. Many components included in the lidar, such as light sources, detectors, integrated circuit boards, leading wires, need to have reasonably designed structures to meet miniaturization requirements in the market without affecting fulfillment of other technical indicators. A long-distance lidar system requires not only a relatively large optical aperture for the purpose of reception, that is, a large specular surface, but also a relatively large optical scanning angle.

However, it is difficult for the existing lidar system to achieve a balance between miniaturization and the fulfillment of multiple performance parameters. For example, the existing lidar has a series of problems, for example, poor heat dissipation performance for light sources, low signal-to-noise ratio, inability to implement wide-angle scanning, a small size of the specular surface, and failure to ensure the flatness of the specular surface. In the current development of the lidar, it is still urgent to make improvements in such aspects as how to reasonably arrange the internal space of the lidar, improve space utilization and make the structure more compact while meeting specific optical path design, and further improve the performance of each part based on the prior art, so as to improving the overall performance of the lidar system on the whole and increasing application scenarios of the lidar.

US 2009/002678 A1 describes in a laser radar apparatus, a laser beam generator that generates a laser beam and an optical detector that detects reflected light that has been reflected by an object in a field to be observed. A deflection performing means, provided with one or more deflection means each rotatable on a given central axis thereof, for enabling the deflection means to deflect the laser beam to the field and to deflect the reflected light toward the optical detector. A drive means driven to rotate the deflection means. A direction changing means changes a direction of the laser beam from the deflection means is changed in a direction of the central axis. A control means controls an operation of the direction changing means.

US 2016/282468 A1 describes a vehicle that includes one or more wheels positioned at a bottom side of the vehicle. The vehicle also includes a first light detection and ranging device, LIDAR, positioned at a top side of the vehicle opposite to the bottom side. The first LIDAR is configured to scan an environment around the vehicle based on rotation of the first LIDAR about an axis. The first LIDAR has a first resolution. The vehicle also includes a second LIDAR configured to scan a field-of-view of the environment that extends away from the vehicle along a viewing direction of the second LIDAR. The second LIDAR has a second resolution. The vehicle also includes a controller configured to operate the vehicle based on the scans of the environment by the first LIDAR and the second LIDAR.

CN 107153184 A describes a laser radar. The laser radar comprises a laser emitter which is used for emitting laser; a semitransparent semi-reflective mirror which is used for enabling emergent laser from the laser emitter to be transmitted to a one-dimensional vibrating mirror; the one-dimensional vibrating mirror which is used for changing the direction of the optical path of the emergent laser in the vertical direction; and a rotating structure which is used for changing the direction of the optical path of the emergent laser in the horizontal direction.

JP 2014071027 A describes a laser radar device. The laser radar device includes plural reflection zone structure sections circumferentially disposed around a central axis, with plural irradiation parts, of the sections, causing each of plural reflection surfaces to reflect laser light from a laser diode to emit reflection light from an article in plural vertical directions when a rotary body is within a predetermined rotation angle range, and causes each reflection part of the irradiation origin to reflect the reflection light from the article to guide it as input light. The other single irradiation parts reflect laser light from the laser diode in individual directions when the rotary body is within another rotation angle range, and reflect the reflection light from the article on individual irradiation parts of the irradiation origin to guide the reflection light as input light when the laser light is reflected on the article.

### SUMMARY

The present invention aims to resolve a technical problem of how to enhance heat dissipation performance for a light source, improve a signal-to-noise ratio of data collection, and increase a receiving optical aperture and a scanning field-of-view angle while achieving miniaturization of a lidar.

To resolve the foregoing technical problem, the present invention relates to a lidar system according to claim 1, a vehicle according to claim 13, and a method according to claim 14. Claims 2 to 12 refer to specifically advantageous realizations of the lidar system according to claim 1.

An aspect of the present invention provides a lidar system, including a light source, an optical transmission module, a scanning module, and a detection module. The light source, the optical transmission module, and the scanning module are sequentially arranged along a first optical path; the scanning module, the optical transmission module, and the detection module are sequentially arranged along a second optical path. **In** the first optical path, the light source is configured to transmit a laser beam, the optical transmission module is configured to transmit the laser beam, which is transmitted by the light source, to the scanning module, and the scanning module is configured to reflect the laser beam, which is transmitted by the optical transmission module, to a three-dimensional space, and is configured to change a direction of the laser beam thereby reflected to the three-dimensional space, so as to scan the three-dimensional space. **In** the second optical path, the scanning module is configured to reflect an echo signal of the laser beam to the optical transmission module, and the optical transmission module is configured to reflect the echo signal of the laser beam, which is reflected by the scanning module, to the detection module, the detection module is configured to receive and process the echo signal that is of the laser beam and that is reflected by the optical transmission module, to obtain information on an obstacle in the three-dimensional space, and the echo signal of the laser beam is formed by the obstacle in three-dimensional space by reflecting the laser beam reflected by the scanning module.

Optionally, a part of the first optical path is parallel or coaxial with a part of the second optical path.

The optical transmission module includes: a support body, where an optical channel is set in the support body; and a plurality of transmission submodules, where the plurality of transmission submodules is disposed on the support body and is sequentially arranged along the optical channel, and is configured to transmit a beam along a preset optical path.

Optionally, the support body has a first end, a second end, a third end, a first optical channel connecting the first end with the second end, and a second optical channel connecting the second end with the third end; and the optical transmission module includes a first transmission submodule, a second transmission submodule, and a third transmission submodule that are disposed at the first end, the second end, and the third end respectively.

Optionally, the first transmission submodule is perpendicular to the first optical channel, the second transmission submodule is disposed at a 45° angle against the first optical channel and the second optical channel separately, the third transmission submodule is disposed at a 45° angle against the second optical channel, and the first optical channel is perpendicular to the second optical channel.

Optionally, the first transmission submodule is a collimation module, and is configured to adjust the laser beam, which is transmitted by the light source, to a parallel laser beam; the second transmission submodule is a reflection module, and is configured to reflect the parallel laser beam adjusted by the collimation module; and the third transmission submodule is an optical splitting module, and is configured to allow transmission of the parallel laser beam reflected by the reflection module and reflect an echo signal of the parallel laser beam.

Optionally, the lidar system further includes a fiber, disposed on one side of the support body, where one end of the fiber is configured to connect the light source, and the other end of the fiber is configured to change a propagation direction of a laser beam in the fiber so that a laser beam emergent from the other end of the fiber is incident on a transmission submodule of the support body.

Optionally, an end face of the other end of the fiber is at a 45° angle against an optical axis of the fiber, a highly reflective dielectric coating is applied on the end face, and the laser beam in the fiber is reflected by the end face so as to incident into a transmission submodule of the support body.

Optionally, an end face of the other end of the fiber is at a preset angle against an optical axis of the fiber, and the laser beam in the fiber is refracted by the end face and incident on a transmission submodule of the support body.

Optionally, the optical channel includes a through-hole, and the through-hole is filled with air or a transparent medium.

Optionally, the lidar system further includes a housing for accommodating the light source, the optical transmission module, the scanning module, and the detection module.

Optionally, the light source is disposed in a head space of the housing.

Optionally, the light source is in contact with a top inner surface of the housing.

Optionally, heat dissipation parts are disposed around the light source.

Optionally, the lidar system further includes a fiber, where the light source is disposed above the optical transmission module, and is coupled to the optical transmission module through the fiber, and the fiber between the light source and the optical transmission module extends along a vertical direction.

Optionally, the light source further includes a light intensity adjustment element, configured to adjust a light intensity distribution of the laser beam transmitted by the light source.

Optionally, the light intensity adjustment element includes a lens element, configured to reduce a peak intensity of the laser beam transmitted by the light source.

Optionally, the lidar system further includes a front window, where the front window is embedded in a sidewall of the housing, and is configured to allow transmission of the laser beam reflected by the scanning module and allow transmission of an echo signal of the laser beam from the three-dimensional space.

Optionally, the front window is disposed at a tilt angle against the laser beam reflected by the scanning module when the scanning module is at a preset scanning angle, and the scanning angle is a deflection angle of the scanning module against an initial location thereof.

Optionally, the front window is disposed at a tilt angle against a pedestal of the housing.

Optionally, the scanning module includes an electrostatic galvanometer, an electromagnetic galvanometer, a piezoelectric galvanometer, or an electrothermal galvanometer.

Optionally, the scanning module includes a one-dimensional galvanometer or a two-dimensional galvanometer.

Optionally, the scanning module includes: a movable part, configured to reflect the laser beam, which is transmitted by the optical transmission module, to the three-dimensional space, and change, by rotating or swinging, a direction of the laser beam thereby reflected to the three-dimensional space; and a driving part, configured to drive the movable part to rotate or swing.

Optionally, the driving part includes a magnet assembly and a drive coil, where the magnet assembly is configured to generate a magnetic field, the magnetic field has a magnetic field component on a plane where the drive coil is located; and the drive coil is coupled to the movable part and is configured to rotate or swing under a force in the magnetic field when a drive current is input, and drive the movable part to rotate or swing.

Optionally, the scanning module includes a scanning substrate and the driving part; where the scanning substrate includes a first torsion shaft, a support part, and the movable part, and the movable part is coupled to the support part through the first torsion shaft and is configured to rotate or swing around the first torsion shaft.

Optionally, the magnet assembly includes a magnet disposed on at least one side of the scanning substrate along a thickness direction thereof, and a preset distance exists between the magnet and the movable part.

Optionally, the magnet assembly includes magnets disposed oppositely on two sides of the scanning substrate along a thickness direction thereof, and magnetic pole directions of the opposite magnets are opposite to each other; magnets located on the same side of the scanning substrate are discretely disposed on two sides of the first torsion shaft, and magnetic pole directions of the magnets located on the two sides of the first torsion shaft are opposite to each other.

Optionally, the movable part includes an inner frame, a second torsion shaft, and an outer frame; the outer frame is coupled to the support part through the first torsion shaft and is configured to rotate or swing around the first torsion shaft, the inner frame is coupled to the outer frame through the second torsion shaft and is configured to rotate or swing around the second torsion shaft, and the inner frame has a smooth surface and is configured to reflect the laser beam; and the drive coil is disposed on the outer frame or the inner frame.

Optionally, the first torsion shaft is perpendicular to the second torsion shaft, and the magnet assembly includes a magnet disposed on at least one side of the scanning substrate along a thickness direction thereof, and magnets on the same side of the scanning substrate are disposed diagonally against the first torsion shaft and the second torsion shaft, and magnetic pole directions of the magnets disposed diagonally are opposite to each other.

Optionally, the magnet assembly includes magnets disposed oppositely on two sides of the scanning substrate along a thickness direction thereof, and magnetic pole directions of the opposite magnets are opposite to each other.

Optionally, the magnets are disposed around along a circumferential direction of the movable part; when the movable part is parallel to a surface of the scanning substrate, a side that is of each magnet and that encircles the movable part is parallel to the drive coil.

Optionally, the drive coil is disposed on a surface of the movable part and disposed along a circumferential direction of the movable part, and the drive coil has a shape of a circular ring or an oval ring; and a side that is of the magnet and that encircles the movable part is an arc surface, and the arc surface is parallel to an opposite arc segment of the drive coil.

Optionally, the drive coil is disposed on a surface of the movable part and disposed along a circumferential direction of the movable part, and the drive coil is polygonal; and a side that is of the magnet and that encircles the drive coil is a plane, and the plane is parallel to one side of the drive coil.

Optionally, on one side that is of the magnet and that encircles the movable part, a cross section of the magnet along a thickness direction of the scanning substrate is an arc, and a center of the arc is recessed toward an interior of the magnet.

Optionally, the magnet assembly further includes a magnetically permeable sheet disposed on at least one side of the scanning substrate, and the magnets located on the at least one side of the scanning substrate are disposed between the magnetically permeable sheet and the scanning substrate.

Optionally, the magnets on the same side of the scanning substrate include two magnets that are centrosymmetrically disposed around the movable part, the drive coil is disposed on the movable part and disposed along a circumferential direction of the movable part, and a length of each magnet along the circumferential direction of the movable part is greater than or equal to 1/4 of a circumference of the drive coil and less than 1/2 of the circumference of the drive coil.

Optionally, a material of the scanning substrate is steel or beryllium copper.

Optionally, the lidar system further includes an angle measurement coil, disposed in the inner frame and configured to measure a scanning angle of the inner frame.

Optionally, the detection module includes: a filtering submodule, configured to filter out an optical signal that has a wavelength beyond a preset wavelength range and that is among laser beam echo signals reflected by the optical transmission module; a convergence module, configured to converge laser beam echo signals filtered by the filtering submodule; and a detection submodule, configured to receive and process the laser beam echo signals converged by the convergence module, so as to obtain information on the obstacle.

Optionally, the detection submodule includes a photosensor and an optical concentrator coupled to the photosensor, and the optical concentrator is configured to widen an angle range of incident light collected by the photosensor.

An aspect of the present invention further provides a vehicle, including a vehicle body and the lidar system. The lidar system is mounted on the vehicle body and is configured to detect information on an obstacle in a three-dimensional space around the vehicle.

An aspect of the present invention further provides a method for controlling a lidar system, including: controlling the transmitting module to transmit a laser beam; controlling the scanning module to scan a three-dimensional space at a preset frequency; and controlling the detection module to receive and process a laser beam echo signal reflected by the scanning module, so as to obtain information on an obstacle in the three-dimensional space.

An aspect of the present invention further provides a method for obtaining a scanning angle. The method is used to obtain a scanning angle of the lidar system, and includes: extracting an angle signal of an angle measurement coil of the lidar system; and calculating a scanning angle of the lidar system based on the angle signal.

Compared with the prior art, the technical solutions in the above-mentioned aspects of the present invention have the following beneficial effects:
With the lidar system according to the aspects of the present invention, the light source, the light transmission module, and the scanning module are sequentially disposed on the first optical path, so that the laser beam can scan the three-dimensional space; and the scanning module, the optical transmission module, and the detection module are sequentially disposed on the second optical path, so that the echo signal of the laser beam can be received. Because the echo signal of the laser beam is formed by an obstacle in the three-dimensional space by reflecting the laser beam reflected by the scanning module, the information on the obstacle in the three-dimensional space can be obtained.

Further, a part of the first optical path is parallel or coaxial with a part of the second optical path. That is, the lidar system is a coaxial system, and effectively avoids the problem of leveling between a transmitting optical path and a receiving optical path in a non-coaxial lidar system, and ensures that the transmitting optical path is always coaxial or parallel with the receiving optical path.

Further, the optical transmission module includes a support body and multiple transmission submodules disposed on the support body. The multiple transmission submodules are sequentially disposed along the optical channel, and are configured to transmit a beam along a preset optical path. Therefore, it is not necessary to dispose a bracket for each transmission submodule separately, thereby improving the integration degree of the multiple transmission submodules. Moreover, because the optical channel is disposed inside the support body, the preset optical path does not need to occupy the space outside the support body. Therefore, both the structure of the optical transmission module and the optical path are designed compactly, the space actually occupied by the optical transmission module is reduced, the internal space utilization rate of the lidar system is improved, and the miniaturization requirement on the lidar in the market is satisfied.

Further, the optical transmission module includes a collimation module, a reflection module, and an optical splitting module that are disposed on a first end, a second end, and a third end of the support body respectively and that are disposed at a preset angle against the first optical channel and the second optical channel respectively, thereby implementing collimation, reflection, and optical splitting of the laser beam while saving space.

Further, the lidar system further includes a fiber disposed on one side of the support body. By setting a 45° angle between an end face of the other end of the fiber and an optical axis of the fiber, a function of deflecting the laser beam can be implemented. Alternatively, by setting a preset angle between the end face of the other end of the fiber and the optical axis of the fiber, the beam in the fiber is refracted by the end face to implement the function of deflecting the laser beam. **In** the aspects of the present invention, through the special design of the end face of the fiber, the reflection module deflects the beam while the fiber is transmitting the beam. Therefore, without requiring additional reflection modules, the number of transmission submodules on the support body is reduced, and the fiber is utilized efficiently.

Further, the light source is disposed in the head space of the housing of the lidar, thereby facilitating heat dissipation of the light source on the one hand and facilitating arrangement of the fiber on the other hand.

Further, the light source is in contact with the top inner surface of the housing, so that the heat of the light source can be dissipated through the housing.

Further, heat dissipation parts such as a heat dissipation pad, a thermal gel, a heat pipe, cooling water, or a cooling gas are disposed around the light source to enhance heat dissipation effects.

Further, a preset distance may exist between the light source and the top inner surface of the housing, and is used to accommodate the heat dissipation parts and is conducive to enhancing the heat dissipation effect.

Further, the light source is disposed above the optical transmission module, and is coupled to the optical transmission module through a fiber. The fiber between the light source and the optical transmission module extends along a vertical direction, thereby achieving compactness of the design of the internal structure of the lidar system and the optical path, improving the space utilization rate inside the housing, and helping miniaturize the lidar system.

Further, the light source also includes a light intensity adjustment element configured to adjust a light intensity distribution of the laser beam transmitted by the light source. The light intensity adjustment element may include a lens element configured to reduce a peak intensity of the laser beam transmitted by the light source, and can ensure that a transmitting intensity of the lidar system keeps below an acceptable limit, without attenuating a total luminous flux, thereby improving safety performance of the lidar system.

Further, the front window of the lidar system is disposed at a tilt angle against a pedestal of the housing. An essential mechanism thereof is that the front window is disposed at a tilt angle against emergent light emitted from the lidar system along a preset direction, so as to prevent stray light, which is generated by the front window by reflecting the emergent light, from going back into the housing along an original route, and to increase the signal-to-noise ratio of the lidar system.

Further, the scanning module includes a movable part and a driving part. The driving part includes a magnet assembly and a drive coil. With the drive coil coupled to the movable part, when a drive current is input into the drive coil, the drive coil is forced to rotate or swing in a magnetic field, and drives the movable part to rotate or swing, thereby implementing large-aperture and wide-angle scanning cost-effectively.

Further, the magnet assembly includes a magnet disposed on at least one side of the scanning substrate along a thickness direction thereof. A preset distance exists between the magnet and the movable part so that the magnet will not interfere with the rotation or swing of the movable part while applying a magnetic field to the drive coil.

Further, the magnet assembly includes magnets disposed oppositely on two sides of the scanning substrate along a thickness direction thereof, and magnetic pole directions of the opposite magnets are opposite to each other. That is, homonymic magnetic poles of the magnets on the two sides of the scanning substrate are opposite to each other. **In** this way, due to being squeezed, the magnetic field is distributed on the surface of the scanning substrate, thereby enhancing the magnetic field on the surface of the scanning substrate. On the other hand, the magnets on the same side of the scanning substrate are discretely disposed on the two sides of the first torsion shaft, and magnetic pole directions of the magnets on the two sides of the first torsion shaft are opposite to each other. That is, in both a vertical direction and a horizontal direction, the magnetic pole directions of the magnets are opposite to each other, thereby generating a single-orientation magnetic field on the surface of the scanning substrate.

Further, the movable part includes an inner frame, a second torsion shaft, and an outer frame. The outer frame is coupled to the support part through the first torsion shaft, and the inner frame is coupled to the outer frame through the second torsion shaft. That is, the scanning mirror may have two torsion shafts. The first torsion shaft is used as a slow scanning shaft, and the second torsion shaft is used as a quick scanning shaft. A large frequency difference exists between the quick scanning shaft and the slow scanning shaft, so that the scanning mirror can implement raster scanning.

Further, the magnets are disposed around along a circumferential direction of the movable part. When the movable part is parallel to the surface of the scanning substrate, one side that is of each magnet and that encircles the movable part is parallel to the drive coil, thereby reducing the distance between each magnet and the drive coil, increasing the magnetic field applied by the magnets to the driving coil, increasing a driving force, enlarging a deflection angle of the movable part, and further enlarging the optical scanning angle of the scanning mirror.

Further, on one side that is of the magnet and that encircles the movable part, a cross section of the magnet along a thickness direction of the scanning substrate is an arc, and a center of the arc is recessed toward the interior of the magnet. In this way, the magnet can also be disposed around the drive coil along the vertical direction (that is, the thickness direction of the scanning substrate), thereby further reducing the distance between each magnet and the drive coil, enhancing the magnetic field, and increasing the driving force.

Further, the magnets on the same side of the scanning substrate include two magnets that are centrosymmetrical to each other around the movable part. The drive coil is disposed along a circumferential direction of the movable part. A length of each magnet along the circumferential direction of the movable part is greater than or equal to 1/4 of a circumference of the drive coil and less than 1/2 of the circumference of the drive coil. That is, the magnets cover as far as possible the circumferential length of the drive coil to enhance the magnetic field applied to the drive coil, increase the driving force, enlarge the deflection angle of the movable part, and enlarge the optical scanning angle of the scanning mirror.

Further, the magnet assembly further includes a magnetically permeable sheet. The magnetically permeable sheet is disposed at a bottom of a magnet on at least one side of the scanning substrate, and can close a magnetic circuit, enhance the magnetic field on the surface of the scanning substrate, that is, enhance the magnetic field applied to the drive coil and increase the driving force.

Further, the magnet assembly may include a magnet disposed on one side of the scanning substrate along a thickness direction thereof, and a preset distance exists between the magnet and the movable part. When the magnet is disposed on one side of the scanning substrate, the space on the other side of the scanning substrate can be freed up to achieve a larger scanning space and scanning angle. **In** addition, it is more convenient and simpler to install magnets on a single side, and installation costs can be further reduced.

Further, by disposing an angle measurement coil on the movable part, the scanning angle is measured, thereby simplifying the angle measurement method that uses a piezoresistor or capacitor in an MEMS process, simplifying the process, and reducing costs.

Further, the detection submodule includes a photosensor and an optical concentrator coupled to the photosensor. The optical concentrator can widen an angle range of incident light collected by the photosensor, and help improve detection efficiency.

The vehicle according to this aspect of the present invention includes a vehicle body and the lidar system. The lidar system is small in size and easy to carry and install, thereby increasing scenes to which the lidar system is applicable. The lidar system has high heat dissipation performance, a high signal-to-noise ratio, a wide optical aperture, and a wide field-of-view angle. Therefore, the comprehensive performance of the lidar system is improved, thereby improving reliability and stability of detection data as well as detection efficiency of the lidar system, improving safety of driving the vehicle, and optimizing the application of the lidar system in the fields such as autonomous driving.

The method for controlling a lidar system according to this aspect of the present invention controls the transmitting module to transmit a laser beam; controls the scanning module to scan a three-dimensional space at a preset frequency; and controls the detection module to receive and process the laser beam echo signal reflected by the scanning module, thereby obtaining the information on the obstacle in the three-dimensional space.

The method for obtaining a scanning angle according to the aspects of the present invention extracts an angle signal of the angle measurement coil of the lidar system, and calculates the scanning angle of the lidar system based on the angle signal, so that the scanning performance of the lidar system can be better evaluated.

### BRIEF DESCRIPTION OF THE DRAWINGS

Each of FIG. 1 to FIG. 24 does not necessarily show each feature of the present invention, which is defined by the independent claims.
FIG. 1 is a structural block diagram of a lidar system 10 according to an embodiment of the present invention;
FIG. 2 is a structural block diagram of an optical transmission module 112 in a lidar system 10 according to an embodiment of the present invention;
FIG. 3 is a structural block diagram of a scanning module 12 in a lidar system 10 according to an embodiment of the present invention;
FIG. 4 is a structural block diagram of a scanning module 22 in a lidar system 10 according to another embodiment of the present invention;
FIG. 5 is a first stereoscopic schematic structural diagram of a lidar system 30 according to an embodiment of the present invention;
FIG. 6 is a first top view of a lidar system 30 in the embodiment shown in FIG. 5 according to the present invention;
FIG. 7 is a side view of a lidar system 30 in the embodiment shown in FIG. 5 according to the present invention;
FIG. 8 is a schematic structural diagram of a sidewall 451 and a pedestal 452 of a housing of a lidar system according to another embodiment of the present invention;
FIG. 9 is a second stereoscopic schematic structural diagram of a lidar system 30 in the embodiment shown in FIG. 5 according to the present invention;
FIG. 10 is a second top view of a lidar system 30 in the embodiment shown in FIG. 5 according to the present invention;
FIG. 11 is a stereoscopic schematic structural diagram of an optical transmission module 312 according to an embodiment of the present invention;
FIG. 12a, FIG. 12b, and FIG. 12c are respectively a main view, a top view, and a right view of the optical transmission module 312 in the embodiment shown in FIG. 11 according to the present invention.
FIG. 13a is a first stereoscopic schematic structural diagram of a support body 316 of the optical transmission module 312 in the embodiment shown in FIG. 11 according to the present invention;
FIG. 13b is a second stereoscopic schematic structural diagram of a support body 316 of the optical transmission module 312 in the embodiment shown in FIG. 11 according to the present invention;
FIG. 14 is a first stereoscopic schematic structural diagram of a scanning mirror 36 according to an embodiment of the present invention;
FIG. 15 is a second stereoscopic schematic structural diagram of a scanning mirror 36 in the embodiment shown in FIG. 14 according to the present invention;
FIG. 16 is a second stereoscopic schematic structural diagram of a scanning mirror 36 in the embodiment shown in FIG. 14 according to the present invention;
FIG. 17 is a stereoscopic schematic structural diagram of a scanning substrate 361 and magnets 362 of a scanning mirror 36 in the embodiment shown in FIG. 14 according to the present invention;
FIG. 18 is a stereoscopic schematic structural diagram of a scanning substrate 461 and a magnet 462 of a scanning mirror according to another embodiment of the present invention;
FIG. 19 is a schematic structural diagram of a scanning substrate 561 of a scanning mirror according to another embodiment of the present invention;
FIG. 20 is a schematic structural diagram of a scanning substrate 661 of a scanning mirror according to another embodiment of the present invention;
FIG. 21 is a stereoscopic schematic structural diagram of a magnet 762 of a scanning mirror according to another embodiment of the present invention;
FIG. 22 is a cross-sectional view of sectioning a magnet 762 in the embodiment shown in FIG. 21 along an A-A1 line in FIG. 21 according to the present invention;
FIG. 23 is a flowchart of a method for controlling a lidar system according to an embodiment of the present invention; and
FIG. 24 is a flowchart of a method for obtaining a scanning angle of a lidar system according to an embodiment of the present invention.

### DETAILED DESCRIPTION

To make the objectives, features and beneficial effects of the present invention more comprehensible, specific embodiments of the present invention are described in detail below with reference to the accompanying drawings. The embodiments in this specification are all described in a progressive manner. Descriptions of each embodiment focus on differences from other embodiments, and same or similar parts among respective embodiments may be mutually referenced.

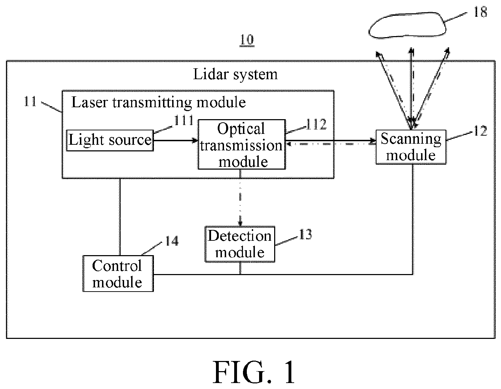

An embodiment of the present invention provides a lidar system. Referring to FIG. 1, FIG. 1 is a structural block diagram of a lidar system 10 according to an embodiment of the present invention.

In some embodiments, the lidar system 10 may include a laser transmitting module 11, a scanning module 12, and a detection module 13. The laser transmitting module 11 includes a light source 111 and an optical transmission module 112. The light source 111, the optical transmission module 112, and the scanning module 12 are sequentially arranged along a first optical path (shown by a solid arrow in FIG. 1). The scanning module 12, the optical transmission module 112, and the detection module 13 are sequentially arranged along a second optical path (shown by a dashed arrow in FIG. 1).

In some embodiments, the first optical path may be a transmitting optical path. In the transmitting optical path, the light source 111 is configured to generate a laser beam, the optical transmission module 112 is configured to transmit the laser beam, which is generated by the light source 111, to the scanning module 12, and the scanning module 12 is configured to reflect the laser beam, which is transmitted by the optical transmitting module 112, to a three-dimensional space. In some embodiments, the scanning module 12 is further configured to change a direction of the laser beam reflected by it to the three-dimensional space, so as to scan an obstacle 18 in the three-dimensional space.

In some embodiments, the second optical path may be a receiving optical path. In the receiving optical path, the obstacle 18 is illuminated by the laser beam reflected by the scanning module 12 in the three-dimensional space, and reflects the laser beam to form a laser beam echo signal. The scanning module 12 is configured to reflect the laser beam echo signal to the optical transmission module 112. The optical transmission module 112 is configured to reflect the laser beam echo signal, which is reflected by the scanning module 12, to the detection module 13. The detection module 13 is configured to receive and process the laser beam echo signal reflected by the optical transmission module 112 to obtain the information on the obstacle 18 in the three-dimensional space.

Depending on whether the optical axis of the transmitting optical path is parallel or coincident with the optical axis of the receiving optical path, the lidar may be generally classified into a non-coaxial system and a coaxial system. In some embodiments, a part of the first optical path may be parallel or coaxial with a part of the second optical path. Specifically, as shown in FIG. 1, a part between the optical transmission module 112 and the obstacle 18 in the first optical path may be parallel or coaxial with a part between the obstacle 18 and the optical transmission module 112 in the second optical path. That is, the lidar system 10 may be a coaxial system. In other embodiments, the optical axis of the first optical path may be neither parallel nor coincident with the optical axis of the second optical path. That is, the lidar system 10 may also be a non-coaxial system. The coaxial system may effectively avoid the problem of leveling between the transmitting optical path and the receiving optical path in a non-coaxial lidar system.

In some embodiments, the lidar system 10 may further include a control module 14. The control module 14 may be coupled to the laser transmitting module 11, the scanning module 12, and the detection module 13, and is configured to control the laser transmitting module 11 to generate and transmit a laser beam, control the scanning module 12 to scan the three-dimensional space, and control the detection module 13 to receive and process the laser beam echo signal.

It should be noted that the first optical path and the second optical path in FIG. 1 are merely intended to illustrate the transmission relationship of the laser beam between the modules, but do not represent a propagation direction of the laser beam in an actual physical space. According to a specific embodiment, the propagation direction of the laser beam and the physical location of each module may be changed appropriately.

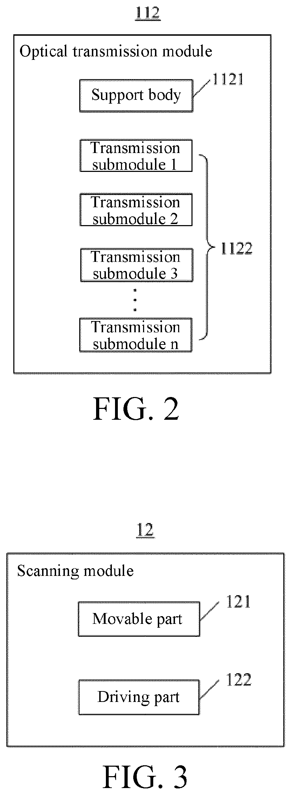

Referring to FIG. 2, FIG. 2 is a structural block diagram of an optical transmission module 112 in a lidar system 10 according to an embodiment of the present invention.

In some embodiments, the optical transmission module 112 may include a support body 1121 and at least one transmission submodule 1122 (that is, a transmission submodule 1, a transmission submodule 2, a transmission submodule 3,..., a transmission submodule n, where n is a positive integer greater than or equal to 1). An optical channel is set in the support body 1121. The optical channel may be configured for passage of light. The at least one transmission submodule 1122 is disposed on the support body and disposed along the optical channel sequentially, and is configured to transmit a beam along a preset optical path defined by the optical channel.

According to the invention, the optical transmission module 112 includes multiple transmission submodules 1122 (that is, n ≥ 2), and the optical channels may be plural in number, and are located between adjacent transmission submodules 1122 to connect up the adjacent transmission submodules 1122. Each of the transmission submodules 1122 may be disposed at a preset angle against an optical channel adjacent thereto.

In some embodiments, the optical channel may include a through-hole, and the through-hole may be filled with air or a transparent medium.

In some embodiments, the optical channel may have a polygonal line shape, thereby helping improve the utilization rate of the internal space of the support body 1121 and reduce the space occupied by the optical path outside the support body.

It should be noted that the optical transmission module 112 according to this embodiment of the present invention is configured to not only transmit a beam, but also adjust the beam appropriately during the transmission process, for example, perform collimation, convergence, or splitting of the laser beam transmitted by the light source 111 (as shown in FIG. 1). Accordingly, the multiple transmission submodules 1122 may include a collimation module, a convergence module, and/or an optical splitting module, and the like.

Referring to FIG. 3, FIG. 3 is a structural block diagram of a scanning module 12 according to an embodiment of the present invention. The scanning module 12 may include a movable part 121 and a driving part 122. The movable part 121 is configured to reflect the laser beam, which is transmitted by the optical transmission module 112 (as shown in FIG. 1), to a three-dimensional space, and change, by rotating or swinging, the direction of the laser beam thereby reflected to the three-dimensional space. The driving part 122 is configured to drive the movable part 121 to rotate or swing.

A resonant scanning mirror (hereinafter referred to as "galvanometer")-type lidar is regarded as an important technical route in solid-state lidar solutions. Compared with conventional projection imaging, in galvanometer-type lidar, the galvanometer is configured to not only scan a beam when the beam is transmitted, but also receive and reflect an echo signal of the beam.

In some embodiments, galvanometers may be classified into an electrostatic galvanometer, an electromagnetic galvanometer, a piezoelectric galvanometer, an electrothermal galvanometer, and the like depending on the driving manner of the driving part.

In some embodiments, the scanning module 12 may include an electromagnetic galvanometer, and the driving part may include a magnet assembly and a drive coil. The magnet assembly is configured to generate a magnetic field, the magnetic field has a magnetic field component on a plane where the drive coil is located; and the drive coil is coupled to the movable part and is configured to rotate or swing under a force in the magnetic field when a drive current is input, and drive the movable part to rotate or swing.

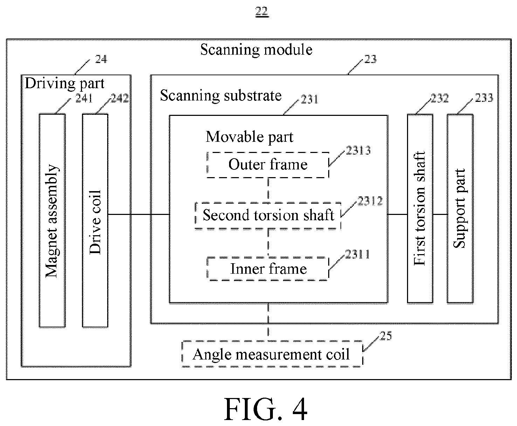

FIG. 4 shows a structural block diagram of a scanning module 22 according to another embodiment of the present invention. The scanning module 22 may be an electromagnetic galvanometer.

In some embodiments, the scanning module 22 may include a scanning substrate 23 and a driving part 24. The scanning substrate 23 may include a movable part 231, a first torsion shaft 232, and a support part 233. The movable part 231 is coupled to the support part 233 through the first torsion shaft 232 and is configured to rotate or swing around the first torsion shaft 232. The movable part 231 has a smooth surface and is configured to reflect a beam. Specifically, the smooth surface may be a specular surface. The support part 233 is configured to provide support for the movable part 231 and may be fixedly disposed in the space.

In some embodiments, the driving part 24 may include a magnet assembly 241 and a drive coil 242. The magnet assembly 241 is configured to generate a magnetic field. The magnetic field has a magnetic field component on a plane where the drive coil 242 is located. The drive coil 242 is coupled to the movable part 231 and is configured to rotate or swing under a force in the magnetic field when a drive current is input, and drive the movable part 231 to rotate or swing.

**In** some embodiments, the drive coil 242 may be disposed on the movable part 231. Specifically, the movable part 231 has a first surface and a second surface that are opposite to each other. The first surface may be a specular surface configured to reflect a beam. The drive coil 242 may be disposed on the second surface of the movable part 231. **In** other embodiments, the drive coil may also be disposed on the first surface the movable part.

Generally, galvanometers may be classified into a one-dimensional galvanometer and a two-dimensional galvanometer depending on the scanning manner.

**In** some embodiments, the scanning substrate 23 may have only one torsion shaft, that is, the first torsion shaft 232. **In** this case, the scanning module 23 is a single-axis scanning mirror (that is, a one-dimensional galvanometer), and is configured to perform optical scanning in a one-dimensional direction.

**In** some embodiments, the movable part 231 may include an inner frame 2311, a second torsion shaft 2312, and an outer frame 2313. The outer frame 2313 is coupled to the support part 233 through the first torsion shaft 232 and is configured to rotate or swing around the first torsion shaft 232. The inner frame 2311 is coupled to the outer frame 2313 through the second torsion shaft 2312 and is configured to rotate or swing around the second torsion shaft 2312. The inner frame 2311 has a smooth surface and is configured to reflect the beam. The drive coil 242 may be disposed on the outer frame 2313. **In** this case, the scanning substrate 23 has two torsion shafts (that is, the first torsion shaft 232 and the second torsion shaft 2312). The scanning module 22 is a dual-axis scanning mirror (that is, a two-dimensional galvanometer), and is configured to perform optical scanning in a two-dimensional plane. Specifically, the first torsion shaft 232 may be perpendicular to the second torsion shaft 2312, and they are configured to form resonance modes in different directions, such as a horizontal resonance mode and a vertical resonance mode. In other embodiments, the drive coil may also be disposed on the inner frame, thereby reducing an optical scanning angle of the scanning module compared with the case of disposing the driving coil on the outer frame.

In some embodiments, the scanning module 22 may further include an angle measurement coil 25 disposed on the movable part 231 and configured to measure a rotation angle or a swing angle of the movable part 231. Specifically, the angle measurement coil 25 may be disposed on the inner frame 2311, and configured to measure the rotation angle or swing angle of the inner frame 2311.

In some embodiments, the scanning module 22 further includes a location sensor (not shown), configured to detect a mechanical fault or the like of the scanning module 22. The location sensor may be disposed on the movable part 231, or disposed outside the movable part 231 and electrically connected to the movable part 231. Specifically, when the location sensor is disposed outside the movable part 231, a contact element is further disposed on the movable part 231. The movable part 231 is electrically connected to the location sensor through the contact element. The location sensor may be an electrical element or a logical circuit or the like.

It should be noted that the structure shown by the dashed line in the structural block diagram in FIG. 4 is an optional structure, and shall not constitute a limitation on this embodiment of the present invention. The structural block diagram in FIG. 4 focuses on explaining main parts included in the scanning module 22 according to an embodiment of the present invention, the relationships between the parts, and the functions of the parts. Understandably, some minor parts such as conducting wires and brackets are omitted in the drawing.

Still referring to FIG. 1, in some embodiments, the detection module 13 may include a photosensor and a processor. The photosensor is configured to receive a laser beam echo signal reflected by the optical transmission module 112, and convert an optical signal into an electrical signal. The processor is configured to process the electrical signal and obtain an image of a three-dimensional space through calculation, so as to obtain information on an obstacle in the three-dimensional space.

In some embodiments, the information on the obstacle may include information such as a distance, speed, or orientation of the obstacle in a three-dimensional space. When the lidar system 10 is configured to detect a distance of an obstacle in a three-dimensional space, the processor is configured to calculate a distance between the obstacle and the lidar system 10 based on a Time of Flight (TOF) method. The entire target region may be scanned and detected through the scanning module 12 to finally implement three-dimensional imaging.

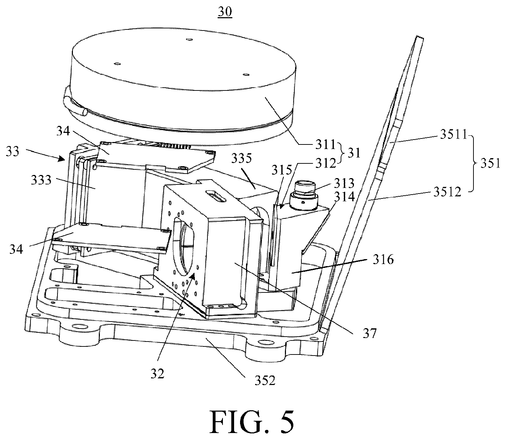

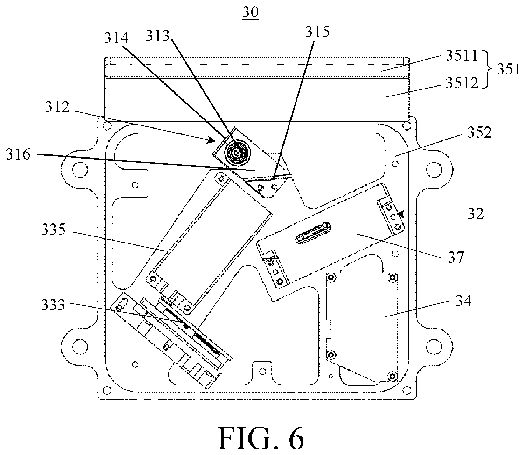

To enable those skilled in the art to better understand and implement the present invention, an embodiment of the present invention further provides another lidar system. Referring to FIG. 5 and FIG. 6, FIG. 5 is a first stereoscopic schematic structural diagram of a lidar system 30 according to another embodiment of the present invention; and FIG. 6 is a first top view of a lidar system 30 in the embodiment shown in FIG. 5 according to the present invention. In the top view shown in FIG. 6, the light source 311 is omitted in order to more clearly show the internal structure of the lidar system 30.

In some embodiments, the lidar system 30 may include a laser transmitting module 31, a scanning module 32, a detection module 33, and a control module 34. The laser transmitting module 31 includes a light source 311 and an optical transmission module 312. The light source 311 is configured to generate a laser beam, and the optical transmission module 312 is configured to transmit the laser beam along a preset optical path.

In some embodiments, the control module 34 may be a control circuit board.

In this embodiment, for the main functions of the laser transmitting module 31, the scanning module 32, the detection module 33, and the control module 34, reference may be made to the description of the corresponding modules in the lidar system 10 in the embodiments shown in FIG. 1 to FIG. 4, and details are omitted here. The following only describes the differences between this embodiment and the foregoing embodiments in detail.

In some embodiments, the lidar system 30 further includes a housing (not shown) configured to accommodate the laser transmitting module 31, the scanning module 32, the detection module 33, and the control module 34. To clearly show the internal structure of the lidar system 30, FIG. 5 and FIG. 6 show only a sidewall 351 and a pedestal 352 of the housing.

In some embodiments, the light source 311 may be a laser, such as a semiconductor laser, a wavelength-tunable solid-state laser, or a fiber laser. Different types of lasers may transmit laser beams that have different wavelengths. For example, the light source 311 that is a semiconductor laser can transmit a near-infrared laser beam.

In some embodiments, the light source 311 may be disposed in a head space of the housing. Specifically, the light source 311 may closely fit a top inner surface (not shown) of the housing, and the heat generated by the light source 311 may be dissipated through the housing; or, a preset distance exists between the light source 311 and the top inner surface of the housing, and is used to accommodate heat dissipation parts such as a heat dissipation pad, and the preset distance may be 5 mm to 1 cm.

In some embodiments, the ratio of the area of the top of the light source 311 to the area of the top inner surface of the housing is adjusted to achieve different heat dissipation effects.

In some embodiments, a heat conducting apparatus such as a heat pipe or thermal gel, or a cooling apparatus such as cooling water or a cooling gas, may be further applied around the light source 311 to further enhance the heat dissipation effect.

In some embodiments, the light source 311 may be a laser. The laser 311 may be disposed on the top of the housing. The optical transmission module 312 may be disposed at the bottom of the housing. The laser 311 may include a fiber, and the laser 311 is coupled to the optical transmission module 312 through the fiber (not shown). Specifically, the fiber may be led out from a side face of the laser 311, and coupled to the optical transmission module 312. For example, the optical transmission module 312 includes a collimation module 313, and the fiber may be coupled to the collimation module 313, so that the fiber between the side face of the laser 311 and the optical transmission module 312 extends along a vertical direction.

In some embodiments, the light source 311 may further include a light intensity adjustment element, configured to adjust a light intensity distribution of the laser beam transmitted by the light source 311. Specifically, the light source 311 may be a semiconductor laser. A light emitting element in the semiconductor laser includes a laser diode. Because the light intensity emitted by the laser diode-based light emitting element generally takes on a Gaussian distribution, in order to ensure that the transmitting intensity of the lidar system 30 keeps below an acceptable limit and that the total luminous flux will not attenuate, the light intensity adjustment element may be a lens element disposed on the light emitting element and configured to reduce a peak intensity of the laser beam transmitted by the lidar system 30. In some embodiments, the lens element may be a diffractive optical element capable of transforming a Gaussian distribution into a flat-top distribution.

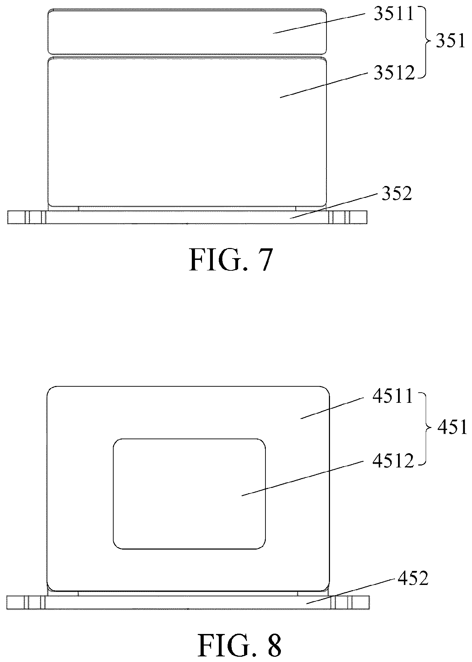

Referring to FIG. 7, FIG. 7 is a side view of a lidar system 30 in the embodiment shown in FIG. 5 according to the present invention. In some embodiments, the lidar system 30 further includes a front window 3512. The front window 3512 is embedded in one sidewall 351 of the housing. One sidewall 351 of the housing may include a wall part 3511 and the front window 3512. The front window 3512 is configured to allow transmission of a laser beam reflected by the scanning module 32 and allow transmission of a laser beam echo signal reflected by an obstacle in a three-dimensional space.

In some embodiments, the front window 3512 is disposed at a tilt angle against a pedestal 352 of the housing. An essential mechanism thereof is that the front window 3512 is disposed at a tilt angle against emergent light emitted from the lidar system 30 along a preset direction, so as to prevent stray light, which is generated by the front window 3512 by reflecting the emergent light, from going back into the housing along an original route, and to increase the signal-to-noise ratio of the lidar system 30.

In some embodiments, the scanning module 32 is configured to change the direction of the laser beam that it reflects into the three-dimensional space. That is, reflected light of the scanning module 32 is in multiple directions, so that the emergent light of the lidar system 30 is also in multiple directions. In this case, the front window 3512 may be set to be at a tilt angle against the laser beam that is reflected by the scanning module 32 at a preset scanning angle (for example, at a 0° scanning angle). The scanning angle is defined as a deflection angle of the scanning module 32 against an initial location thereof. The 0° scanning angle means that the scanning module 32 does not deflect against the initial location thereof. Specifically, the scanning module 32 is configured to scan in a horizontal direction and a vertical direction, and the 0° scanning angle may be both a 0° angle of scanning by the scanning module 32 along the horizontal direction and a 0° angle of scanning along the vertical direction.

In some embodiments, when the scanning angle of the scanning module 32 along the vertical direction is 0°, the scanning module 32 is perpendicular to the pedestal 352 of the housing. That is, the laser beam reflected when the scanning module 32 scans at a 0° angle is parallel to the pedestal 352 of the housing. The front window 3512 may be disposed at a tilt angle against the pedestal 352, where the tilt angle is in a preset range. Specifically, an angle between the front window 3512 and the pedestal 352 of the housing may be an obtuse angle (as shown in FIG. 5). Assuming that the pedestal 352 of the housing is parallel to a horizontal plane, the angle between the front window 3512 and the vertical direction may range from 10° to 20°. In other embodiments, the angle between the front window and the pedestal of the housing may be an acute angle.

In some embodiments, the front window 3512 may be a laser window mirror. The laser window mirror can protect the scanning module 32 from splashes and other hazards in the workplace. The laser window mirror is generally made from a highly transmissive material for a specific wavelength, and coated with an anti-reflective film to reduce losses caused by reflections.

The structure of the front window 3512 is diversified. In the embodiment shown in FIG. 7, the front window 3512 is disposed below the wall part 3511. In other embodiments, the front window may be embedded into the sidewall of the housing in other ways, as shown in FIG. 8, for example. FIG. 8 is a schematic structural diagram of a sidewall 451 and a pedestal 452 of a housing of a lidar system according to another embodiment of the present invention. The front window 4512 is embedded in a middle region of the sidewall 451 of the housing, and the wall part 4511 is disposed around the front window 4512.

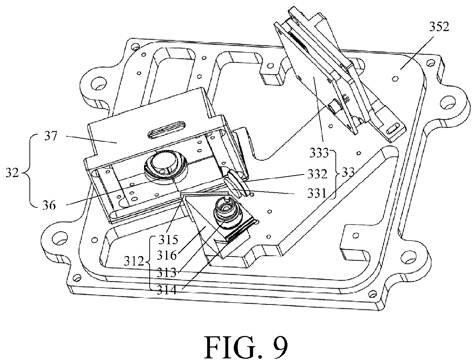

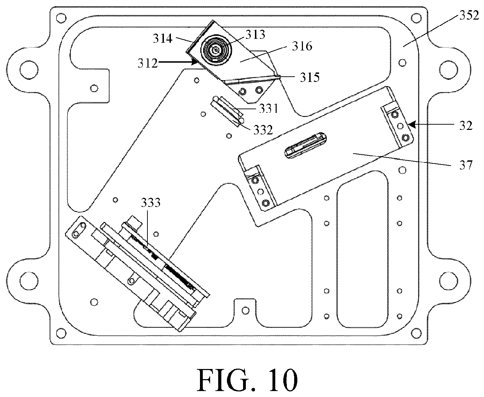

With reference to FIG. 9 and FIG. 10, FIG. 9 is a second stereoscopic schematic structural diagram of a lidar system 30 in the embodiment shown in FIG. 5 according to the present invention, and FIG. 10 is a second top view of the lidar system 30 in the embodiment shown in FIG. 5 according to the present invention. To illustrate the structure of the detection module 33 conveniently, FIG. 9 and FIG. 10 omit some structures of the lidar system 30, such as a light source 311, a control module 34, and a light shield 335.

In some embodiments, the detection module 33 may include a filtering submodule 331, a convergence module 332, and a detection submodule 333. The filtering submodule 331 is configured to filter out an optical signal that has a wavelength beyond a preset wavelength range and that is among laser beam echo signals reflected by the optical transmission module 312. The convergence module 332 is configured to converge laser beam echo signals transmitted by the filtering submodule 331. The detection submodule 333 is configured to receive and process the laser beam echo signals converged by the convergence module 332, so as to obtain information on the obstacle in the three-dimensional space.

In some embodiments, the filtering submodule 331 may be a wavelength-tunable filter or a narrowband filter, the convergence module 332 may be a convergence lens, and the detection submodule 333 may be a photosensor. Specifically, the photosensor may be a PIN photosensor, an avalanche photo diode (APD), or a Geiger-mode avalanche photodiode (GM-APD).

In some embodiments, the detection module 33 may further include a light shield 335 (as shown in FIG. 5 and FIG. 6), and the filtering submodule 331 and the convergence module 332 are disposed in the light shield 335.

In some embodiments, the detection submodule 333 may include a photosensor and a processor. The photosensor is configured to receive the laser beam echo signals converged by the convergence module 332, and convert an optical signal into an electrical signal. The processor is configured to process the electrical signal and obtain the information on the obstacle in the three-dimensional space through calculation.

In some embodiments, the detection submodule 333 may further include an optical concentrator. The optical concentrator may be coupled to a single photodetection element in a photodetection array of the photosensor, and may configured to not only protect the photodetection element but also collect incident light in a range of a wider angle. The optical concentrator may be a molded lens, such as a domed lens, or a compound parabolic concentrator (CPC).

In some embodiments, the information on the obstacle includes information such as a distance, speed, or orientation of the obstacle in a three-dimensional space. When the lidar system 30 is configured to detect a distance of an obstacle in a three-dimensional space, the processor is configured to calculate a distance between the obstacle and the lidar system 30 based on a Time of Flight (TOF) method. The entire target region may be scanned and detected through the scanning module 32 to finally implement three-dimensional imaging.

In some embodiments, the lidar system 30 may further include various circuit boards, module brackets, conducting wires, and the like. The circuit boards may include a power circuit, a control circuit, and a processing circuit. The brackets may include a bracket of the light source 311, a frame 37 of the scanning mirror 36 in the scanning module 32, and a bracket of the detection submodule 333.

As described in the prior art, the existing lidar can hardly meet device miniaturization requirements in the market, and the light source of the lidar and related optical path design generally occupy a large space inside the lidar. An effective way of reducing the size of the lidar system is to further reduce the space occupied by the light source and the optical transmission parts.

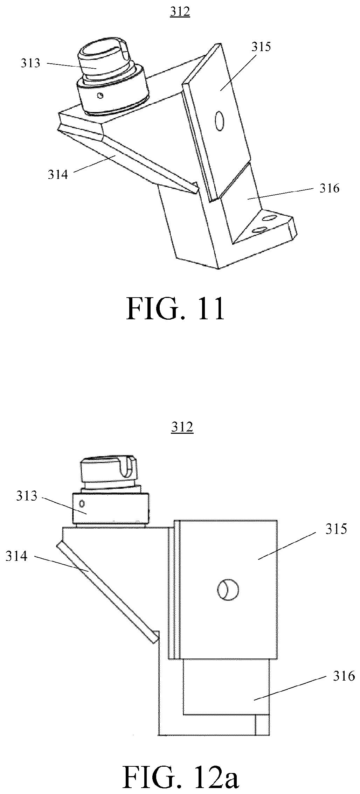

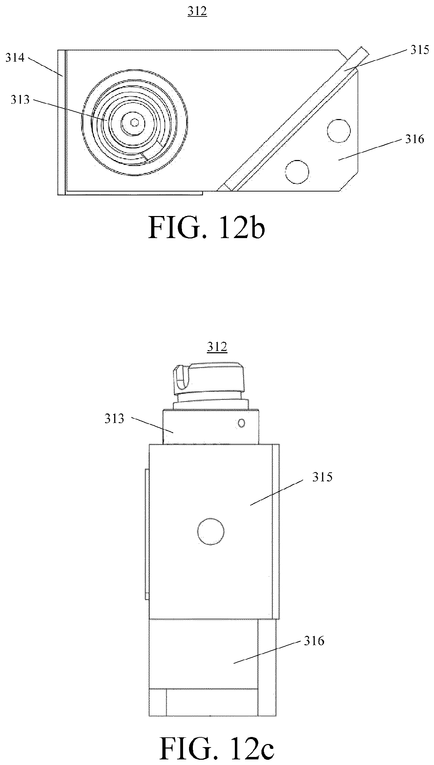

To this end, an embodiment of the present invention further provides an optical transmission module applicable to the lidar system in the foregoing embodiment of the present invention. The structure and functions of the optical transmission module 312 in the lidar system 30 in the embodiment shown in FIG. 5 to FIG. 10 according to the present invention are described in detail below with reference to FIG. 11 to FIG. 13b. FIG. 11 is a stereoscopic schematic structural diagram of an optical transmission module 312 according to an embodiment of the present invention, and FIG. 12a, FIG. 12b, and FIG. 12c are respectively a main view, a top view, and a right view of the optical transmission module 312 in the embodiment shown in FIG. 11 according to the present invention.

In some embodiments, the optical transmission module 312 may include three transmission submodules and a support body 316. The three transmission submodules may be a collimation module 313, a reflection module 314, and an optical splitting module 315 respectively, and are disposed at a first end, a second end, and a third end of the support body 316 respectively. A first optical channel and a second optical channel configured to allow passage of light are disposed in the support body 316. The first end and the second end communicate by the first optical channel, and the second end and the third end communicate by the second optical channel.

The collimation module 313 is configured to adjust beams to parallel beams. The reflection module 314 is configured to reflect the parallel beams, which are adjusted by the collimation module 313, to the optical splitting module 315. The optical splitting module 315 is configured to allow transmission of the parallel beams reflected by the reflection module 314 and reflect echo signals of the parallel beams. The echo signals of the parallel beam may be formed by an obstacle in the three-dimensional space by reflecting the parallel beams. In this embodiment, the beam is a laser beam transmitted by the light source 311. However, the optical transmission module 312 is not limited to transmitting a laser beam.

In some embodiments, the collimation module 313 may be a collimation lens. The collimation lens may include one lens or a set of (that is, multiple) lenses. The reflection module 314 may be a reflector that has a high reflectance. For example, a surface of the reflector is plated with a reflective film to improve its reflectance. The optical splitting module 315 may be an aperture reflector, a semi-transparent and semi-reflective mirror, a polarization beam splitter, a coating-type spectroscope, or the like.

In some embodiments, the light source 311 is coupled to the collimation module 313 of the optical transmission module 312 through a fiber, and the collimation module 313 may be a fiber collimator.

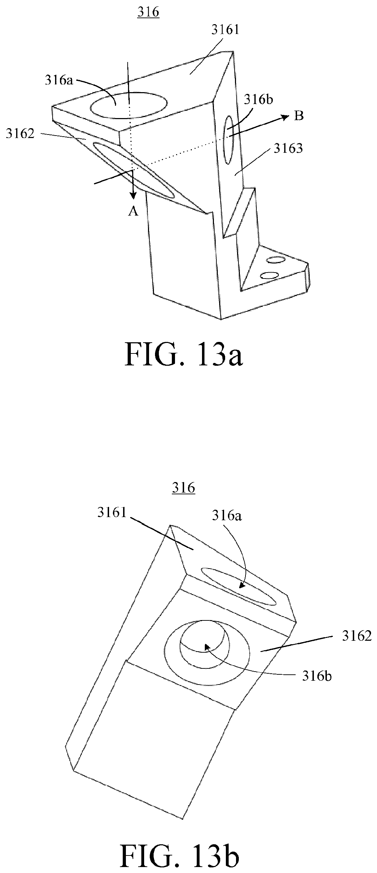

With reference to FIG. 13a and FIG. 13b, FIG. 13a is a first stereoscopic schematic structural diagram of a support body 316 of the optical transmission module 312 in the embodiment shown in FIG. 11 from an angle of view according to the present invention; and FIG. 13b is a second stereoscopic schematic structural diagram of a support body 316 of the optical transmission module 312 in the embodiment shown in FIG. 11 from another angle of view according to the present invention.

In some embodiments, the support body 316 has a first surface 3161, a second surface 3162, and a third surface 3163. As shown in FIG. 11, the collimation module 313, the reflection module 314, and the optical splitting module 315 may be disposed on the first surface 3161, the second surface 3162, and the third surface 3163 respectively. Specifically, an incident surface of the collimation module 313, an incident surface of the reflection module 314, and an incident surface of the optical splitting module 315 may be parallel to the first surface 3161, the second surface 3162, and the third surface 3163 respectively.

In some embodiments, a first optical channel 316a that connects the first surface 3161 with the second surface 3162 and extends along a first direction A, and a second optical channel 316b that connects the second surface 3162 with the third surface 3163 and extends along a second direction B, are disposed in the support body 316. The first surface 3161 is perpendicular to the first direction A, the second surface 3162 is at a 45° angle against both the first direction A and the second direction B, the third surface 3163 is at a 45° angle against the second direction B, and the first direction A is perpendicular to the second direction B.

In some embodiments, both the first optical channel 316a and the second optical channel 316b are hollow through-holes. That is, the through-holes are filled with air. In other embodiments, both the first optical channel 316a and the second optical channel 316b may be through-holes filled with a transparent medium.

In this embodiment, the first optical channel 316a and the second optical channel 316b communicate with each other and have a polygonal line shape, thereby helping improve the utilization rate of the internal space of the support body 316 and reduce the space occupied by the optical path outside the support body 316.

In some embodiments, the support body 316 may be an integrated formation. A threaded hole (not labeled) may be disposed at the bottom of the support body 316, and is configured to fix the optical transmission module 312 to other apparatuses through a screw. For example, the optical transmission module 312 may be fixed onto the pedestal 352 of the housing of the lidar system 30 through a screw.

It should be noted that, in the above embodiment, the structure of the support body 316 is described by using an example in which the optical transmission module 312 includes three transmission submodules. In other embodiments, the number of the transmission submodules included in the optical transmission module is not limited to three, but may be two, four, five, six, and so on. In this case, the structure of the support body needs to be changed accordingly to meet the requirements on the structure or functions of the optical transmission module, optical path design, or the like.

In other embodiments, the optical transmission module may include no reflection module. For example, the 45° reflector 314 in the foregoing embodiment may be replaced by a fiber to perform the function of deflecting the laser beam transmitted by the light source 311. Specifically, the lidar system 30 further includes a fiber, disposed between the light source 311 and the optical transmission module. The optical transmission module may include a support body and at least one transmission submodules disposed on the support body. An optical channel configured to allow passage of light is disposed in the support body. The at least one transmission submodule is sequentially arranged along the optical channel and is configured to transmit beams along a preset optical path. The fiber may be disposed on one side of the support body. One end of the fiber is configured to connect the light source. The other end of the fiber is configured to change a propagation direction of the beam in the fiber so that the beam emergent from the other end of the fiber is incident on one transmission submodule of the support body.

In some embodiments, the support body may have a first end and a second end, and an optical channel that connects the first end with the second end. The optical transmission module may include two transmission submodules disposed at the first end and the second end respectively. Specifically, the two transmission submodules may be a collimation module and an optical splitting module respectively, and the fiber may be disposed on one side of the collimation module.

In some embodiments, by cutting a terminating end of the fiber (that is, the other end of the fiber), an end face of the terminating end of the fiber forms a 45° angle against the optical axis of the fiber. The end face is coated with a highly reflective dielectric coating to provide a specular surface. As reflected by the end face, the beam in the fiber is incident on a transmission submodule of the support body, for example, incident on the collimation module in the foregoing embodiment. The beam is collimated by the collimation module and then incident on the optical splitting module.

In other embodiments, the end face of the other end of the fiber may be cut into any angle, so that the end face of the other end of the fiber is at a preset angle against the optical axis of the fiber. The end face of the other end of the fiber refracts the light to change the propagation direction of the light. That is, as refracted by the end face, the beam in the fiber is incident on a transmission submodule of the support body. In addition, in addition to the fiber applied, an optical waveguide router may be used to replace the 45° reflector in the optical transmission module.

In some embodiments, the collimation module and the optical splitting module may be perpendicular to the optical channel.

With reference to FIG. 5 to FIG. 10 and FIG. 11 to FIG. 13b, the optical paths of the lidar system 30 are described as follows:
The optical path of the lidar system 30 in this embodiment includes a first optical path (that is, a transmitting optical path) and a second optical path (that is, a receiving optical path).

In the first optical path, the light source 311 is configured to transmit laser beams. The laser beams are transmitted by a fiber (not shown) to the collimation module 313 of the optical transmission module 312. The collimation module 313 adjusts the laser beams to parallel laser beams. The parallel laser beams are reflected by the reflection module 314 to the optical splitting module 315, and then transmitted by the optical splitting module 315 to the scanning module 32. The scanning module 32 reflects the parallel laser beams to the front window 3512. The parallel laser beams are transmitted to a three-dimensional space by the front window 3512.

In the second optical path, an obstacle illuminated by the parallel laser beams in the three-dimensional space reflects the laser beams to form laser beam echo signals. The laser beam echo signals are transmitted by the front window 3512 to the scanning module 32. The scanning module 32 reflects the laser beam echo signals to the optical splitting module 315. The optical splitting module 315 reflects the laser beam echo signals to the filtering submodule 331. The laser beam echo signals filtered by the filtering submodule 331 are converged by the convergence module 332, and received by the detection submodule 333.

The part in the first optical path, which is located between the optical splitting module 315 and the obstacle in the three-dimensional space is parallel or coaxial with the part in the second optical path, which is located between the obstacle in the three-dimensional space and the optical splitting module 315. That is, the lidar system 30 is a coaxial system. In other embodiments, the first optical path may be neither parallel nor coincident with the second optical path. That is, the lidar system may be a non-coaxial system.

In some embodiments, the optical splitting module 315 is an aperture reflector. In the first optical path, the parallel laser beams reflected by the reflection module 314 are transmitted to the scanning module 32 by a small hole in the aperture reflector. In the second optical path, the laser beam echo signals are reflected by the scanning module 32 to a specular surface beside the small hole of the aperture reflector, and then reflected by the specular surface beside the small hole to the filtering submodule 331.

An embodiment of the present invention further provides a laser transmitting module. The laser transmitting module may include a light source and the optical transmission module according to the foregoing embodiment of the present invention. The light source is configured to transmit a laser beam, and the optical transmission module is configured to transmit, along a preset optical path, the laser beam transmitted by the light source. Specifically, the laser transmitting module may include a light source and the optical transmission module 112 in the embodiment shown in FIG. 2, or include a light source and the optical transmission module 312 in the embodiment shown in FIG. 11 to FIG. 13b.

In some embodiments, the light source may be a laser, and different types of lasers are configured to generate laser beams of different wavelengths. It can be understood that the "laser beam" may be a laser pulse, continuous laser beams, or the like.

In some embodiments, the laser transmitting module may further include a fiber, or the laser itself includes a fiber. The laser may be coupled to the optical transmission module by the fiber. The laser may be disposed above the optical transmission module, for example, disposed diagonally above the optical transmission module. One end of the fiber may be led out from a side of the laser, and the other end may be coupled to the optical transmission module so that the fiber located between the laser and the optical transmission module extends along a vertical direction.

The laser transmitting module according to this embodiment of the present invention may be applied not only to a lidar system, but also to other devices that use a laser as a light source. Because both the structure of the optical transmission module and the optical path meet compact design, less space is actually occupied by the laser transmitting module, and the laser transmitting module is applicable in a wider range of miniaturized devices.

As described in the background art, the existing lidar cannot achieve a large-sized specular surface or a wide optical scanning angle. For a long-distance lidar system, not only a large-sized receiving optical aperture is required, that is, a large specular surface is required, but also a wide optical scanning angle is required. For example, the optical scanning angle of a galvanometer generally needs to be about 40 degrees in the vertical direction, up to about 120 degrees in the horizontal direction. The specular surface and framework structure of a relatively mature electromagnetic scanning mirror in the prior art are generally manufactured by using a micro-electro-mechanical system (MEMS) technology. The galvanometer made in an MEMS process has a series of problems, for example, inability to implement wide-angle scanning, a small size of the specular surface (generally 1 mm to 2 mm in diameter), and failure to ensure the flatness of the specular surface, limiting the application of the galvanometer to some scenarios that impose specific requirements, for example, to a wide field-of-view angle and a long-distance lidar.

Based on this, in the embodiments of the present invention, the scanning module in the lidar system is further improved to increase the optical scanning angle and the specular surface size.

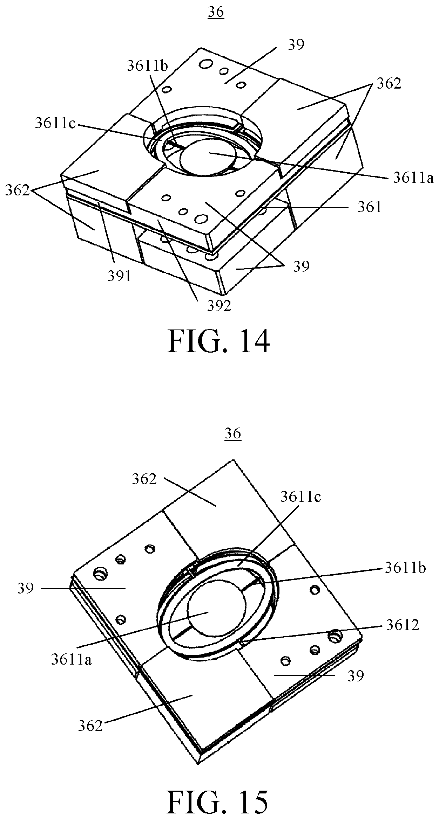

The following describes in detail, with reference to FIG. 14 to FIG. 22, the structure and functions of the scanning module 32 in the lidar system 30 in the embodiments shown in FIG. 5 to FIG. 10 according to the present invention. It should be noted that the scanning module 32 shown in FIG. 5, FIG. 6, FIG.9, and FIG. 10 includes a scanning mirror 36 (as shown in FIG. 9) and a framework 37. The scanning mirror 36 is disposed inside the framework 37. FIG. 14 to FIG. 22 only describe the structure of the scanning mirror 36 thereof in detail.

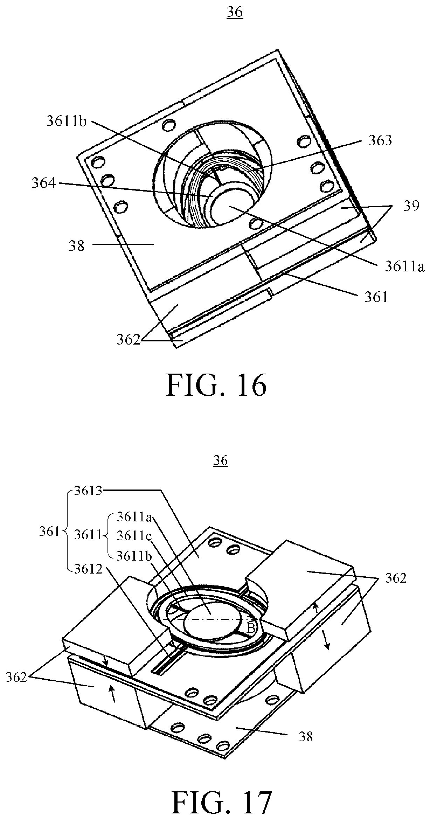

FIG. 14 to FIG. 16 are stereoscopic schematic structural diagrams of the scanning mirror 36 in different angles of view, and FIG. 17 is a stereoscopic schematic structural diagram of a scanning substrate 361 and magnets 362 of the scanning mirror 36 in the embodiment shown in FIG. 14 according to the present invention.

In some embodiments, the scanning mirror 36 may include a scanning substrate 361, a magnet assembly, and a drive coil 363 (as shown in FIG. 16).

Referring to FIG. 17, the scanning substrate 361 may include a movable part 3611, a first torsion shaft 3612, and a support part 3613. The movable part 3611 is coupled to the support part 3613 through the first torsion shaft 3612 and is configured to rotate or swing around the first torsion shaft 3612.

In some embodiments, the magnet assembly may include magnets 362 disposed oppositely on two sides of the scanning substrate 361 along a thickness direction thereof, and magnetic pole directions of the two magnets 362 oppositely disposed along the thickness direction of the scanning substrate 361 are opposite to each other. That is, homonymic magnetic poles of the two opposite magnets 362 are opposite to each other. For example, N poles are opposite or S poles are opposite (as indicated by solid arrows in FIG. 17), so that the magnetic field is squeezed and distributed on the plane where the scanning substrate 361 is located. Specifically, the magnetic pole direction of each magnet 362 may be perpendicular to the surface of the scanning substrate 361. The magnets 362 on the same side of the scanning substrate 361 may be disposed on two sides of the first torsion shaft 3612 respectively, and the magnetic pole directions of the magnets 362 on the two sides of the first torsion shaft 3612 are opposite to each other, so as to generate a single-orientation magnetic field on the plane where the scanning substrate 361 is located. The drive coil 363 may be disposed on the movable part 3611 to drive the movable part 3611 to rotate or swing around the first torsion shaft 3612. When only one torsion shaft is disposed on the scanning substrate 361, the scanning mirror 36 is a one-dimensional galvanometer.

In some embodiments, the magnets 362 are discretely disposed along a circumferential direction of the movable part 3611, and are a preset distance apart from the movable part 3611 to avoid interference with the movement of the movable part 3611. When the movable part 3611 is parallel to the surface of the scanning substrate 361, a side that is of a magnet 362 and that encircles the movable part 3611 is parallel to the drive coil 363, so as to reduce the distance between the magnet 362 and the drive coil 363, widen the magnetic field, increase the driving force, enlarge the deflection angle of the movable part 3611, and enlarge the optical scanning angle of the scanning mirror 36.

In some embodiments, an opening (not shown) exists at the center of the scanning substrate 361, and the movable part 3611 is embedded in the opening. When the movable part 3611 is located at an initial location, the movable part 3611 may be parallel to the surface of the support part 3613. When the movable part 3611 deviates from the initial location and starts to rotate, the plane where the movable part 3611 is located is at a specific angle against the plane where the support part 3613 is located. That is, the movable part 3611 may rotate from inside the plane of the scanning substrate 361 to the outside thereof. In other embodiments, the initial location of the movable part may also be located outside the plane of the scanning substrate, and the movable part may rotate from outside of the plane of the scanning substrate to the inside thereof. In some embodiments, when an alternating current is input to the drive coil 363, the movable part 3611 can perform a reciprocating motion between the inside of the plane of the scanning substrate 361 and the outside thereof, that is, can swing.

In some embodiments, the magnets 362 on the two sides of the scanning substrate 361 may be parallel to the surface of the scanning substrate 361, and the magnetic pole direction of the magnets 362 may be perpendicular to the surface of the scanning substrate 361, or at a tilt angle against the surface of the scanning substrate 361.

In some embodiments, the movable part 3611 may include an inner frame 3611a, a second torsion shaft 3611b, and an outer frame 3611c. The outer frame 3611c is coupled to the support part 3613 through the first torsion shaft 3612 and is configured to rotate or swing around the first torsion shaft 3612. The inner frame 3611a is coupled to the outer frame 3611c through the second torsion shaft 3611b and is configured to rotate or swing around the second torsion shaft 3611b. The inner frame 3611a has a smooth surface and is configured to reflect the beam. In this case, the scanning mirror 36 has two torsion shafts, and is a two-dimensional galvanometer.

In some embodiments, the magnetic pole directions of the two magnets 362 oppositely disposed along the thickness direction of the scanning substrate 361 are opposite to each other. That is, homonymic magnetic poles of the two opposite magnets 362 are opposite to each other. For example, N poles are opposite or S poles are opposite (as indicated by solid arrows in FIG. 17). The magnetic pole directions of the two opposite magnets 362 may be both perpendicular to the surface of the scanning substrate 361. On the other hand, the first torsion shaft 3612 may be perpendicular to the second torsion shaft 3611b. The magnets 362 on the same side of the scanning substrate 361 may be diagonally disposed against the first torsion shaft 3612 and the second torsion shaft 3611b that are orthogonal, and the magnetic pole directions of the diagonally disposed magnets 362 are opposite to each other. That is, the magnetic pole directions of the magnets 362 that are oppositely disposed along the vertical direction (that is, along the thickness direction of the scanning substrate 361) are opposite to each other, and the magnetic pole directions of the magnets 362 that are oppositely disposed along the horizontal direction (that is, along the surface direction of the scanning substrate 361) are opposite to each other. In this way, the magnetic field is squeezed and thereby distributed on the surface of the scanning substrate 361, and a single-orientation magnetic field B (as indicated by the arrow in FIG. 17) is generated on the surface of the scanning substrate 361. The magnetic field B is at an approximate 45° angle against both the first torsion shaft 3612 and the second torsion shaft 3611b.

In some embodiments, when the two magnets 362 on the same side of the scanning substrate 361 are diagonally distributed against the first torsion shaft 3612 and the second torsion shaft 3611b, the length of each magnet 362 along the circumferential direction of the drive coil 363 may be 1/4 of the circumference of the drive coil 363.

In other embodiments, by increasing the circumferential length by which each magnet 362 encircles the drive coil 363, coverage of the magnetic field can be widened, and the magnetic field applied to the drive coil 363 is thereby enhanced. Specifically, the drive coil 363 is disposed along a circumferential direction of the movable part 3611. When the two magnets 362 on the same side of the scanning substrate 361 are diagonally distributed against the first torsion shaft 3612 and the second torsion shaft 3611b, the circumferential length by which each magnet 362 encircles the movable part 3611 may be greater than 1/4 of the circumference of the drive coil 363 and less than 1/2 of the circumference of the drive coil 363. The upper limit 1/2 is set to prevent a magnetic circuit from closing. For example, the length of each magnet 362 along the circumferential direction of the drive coil 363 may be 1/3 of the circumference of the drive coil 363. Compared to 1/4 mentioned in the previous embodiment, the length of the magnet 362 along the circumferential direction of the drive coil 363 is prolonged by about 20%.

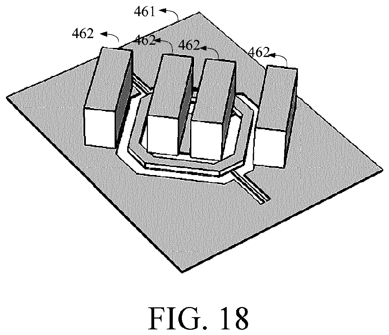

Referring to FIG. 18. FIG. 18 is a stereoscopic schematic structural diagram of a scanning substrate 461 and a magnet 462 of a scanning mirror according to another embodiment of the present invention. In some embodiments, the magnet assembly may include a magnet 462 disposed on one side of the scanning substrate 461 along a thickness direction thereof, and a preset distance exists between the magnet 462 and the movable part. When the magnet 462 is disposed on one side of the scanning substrate 461, the space on the other side of the scanning substrate 461 can be freed up, thereby achieving a larger scanning space and a wider scanning angle. In addition, installing magnets on a single side is more convenient and simpler than installing magnets on both sides, and can further reduce installation costs.

Still referring to FIG. 14 to FIG. 17, in some embodiments, the material of the scanning substrate 361 may be a copper alloy (such as beryllium copper), steel, titanium alloy, aluminum alloy, magnesium alloy, or an organic polymer material (such as carbon fiber), or a silicon carbide (SiC) ceramic material or the like. The scanning substrate 361 may be an integrated formation or may be formed by combining additional assembly modules. The smooth surface of the inner frame 3611a may be integrated on the inner frame 3611a, or may be mounted on the inner frame 3611a by combining additional assembly modules. This is not limited in this embodiment of the present invention. In some embodiments, the smooth surface of the inner frame 3611a may be achieved by polishing a metal material. In other embodiments, the smooth surface of the inner frame 3611a may be a reflector, and the reflector is mounted on the inner frame 3611a.

When the material of the scanning substrate 361 is a steel sheet, the scanning substrate 361 may be manufactured based on a steel sheet processing technology. The manufacturing based on the steel sheet processing technology is a conventional machining process, and is cost-effective and easy to implement, so that large scanning mirrors of millimeter-level or even centimeter-level sizes can be manufactured.

In some embodiments, the magnet assembly further includes a magnetically permeable sheet 38 (as shown in FIG. 16) disposed on one side of the scanning substrate 361. The magnet 362 located on one side of the scanning substrate 361 is disposed between the magnetically permeable sheet 38 and the scanning substrate 361. That is, the magnetically permeable sheet 38 may be disposed at the bottom of the magnet 362 and configured to close a magnetic circuit and enhance the magnetic field on the surface of the scanning substrate 361.

In some embodiments, the magnetically permeable sheet 38 is in contact with the magnet 362 on one side of the scanning substrate 361. An opening may be configured in a region that is located on the magnetically permeable sheet 38 and opposite to the movable part 3611.

In other embodiments, the magnetically permeable sheet 38 may be disposed on both sides of the scanning substrate 361, and the magnets 362 on the same side of the scanning substrate 361 are disposed between the magnetically permeable sheet 38 and the scanning substrate 361 to form a closed magnetic circuit on both sides of the scanning substrate 361. The opening may also be not configured at the center of the magnetic permeable sheet 38.

In some embodiments, the magnetically permeable sheet 38 may be a silicon steel sheet.

In other embodiments, the magnetically permeable sheet may also be made of other highly magnetically permeable materials, such as soft iron, ferrite, silicon steel, iron nickel alloy, iron aluminum alloy, iron cobalt alloy, manganese cobalt and other oxides, or manganese-zinc ferrite materials, or the like. Generally, materials used as a magnetic core are applicable to the magnetically permeable sheet.

In some embodiments, the magnet assembly further includes two magnet holders 39 that are disposed on two sides of the scanning substrate 361 and that are configured to support the magnets 362 located on the two sides of the scanning substrate 361. The magnet holder 39 located on an upper side (that is, an incident light side) of the scanning substrate 361 may be disposed between the magnet 362 on this side and the scanning substrate 361. The magnet holder 39 may include a first part 391 (as shown in FIG. 14) that is located along the thickness direction of the scanning substrate 361 and between the magnet 362 and the scanning substrate 361, and a second part 392 (as shown in FIG. 14) that is located along the surface direction of the scanning substrate 361 and between the diagonally distributed magnets 362. The magnet holder 39 located on a lower side (that is, the side facing away from the incident light) of the scanning substrate 361 may include only a part located between the diagonally distributed magnets 362. The magnet holders 39 are disposed around the movable part 3611 along the other diagonal direction perpendicular to one diagonal direction where the magnets 362 are located, with a preset distance apart from the movable part 3611. The magnet holders 39 and the magnets 362 jointly define a space that allows for rotation or swing of the movable part 3611.

In some embodiments, the magnet holders 39 may be an integrated formation.

In some embodiments, multiple holes (not labeled) may be opened on the magnet holders 39, and configured to perform fixing by using a screw or a knob.

In some embodiments, a preset distance may exist between the magnet holder 39 located on at least one side of the scanning substrate 361 and the scanning substrate 361, and is used for wiring. Specifically, a preset distance may exist between the magnet holder 39 located on the lower side (that is, the side facing away from the incident light) of the scanning substrate 361 and the scanning substrate 361.

In some embodiments, the scanning mirror 36 further includes an angle measurement coil 364 disposed on the inner frame 3611a of the movable part 3611 and configured to measure a rotation angle or a swing angle of the inner frame 3611a. Specifically, the angle measurement coil 364 may be disposed on a rear side of the inner frame 3611a, that is, the side facing away from the smooth surface thereof.

In some embodiments, the drive coil 363 may be disposed on the outer frame 3611c. Specifically, the drive coil 363 may be disposed on a rear side of the outer frame 3611c (as shown in FIG. 16), that is, the side facing away from the incident light. In other embodiments, the drive coil 363 may be disposed on a front side of the outer frame 3611c (that is, the side facing the incident light). In other embodiments, the drive coil 363 may be disposed on the inner frame 3611a, for example, on the rear side of the inner frame (that is, the side facing away from the smooth surface thereof). In this case, the scanning mirror 36 is a uniaxial scanning mirror. Compared with the scenario in which the drive coil 36 is disposed on the outer frame 3611c, this reduces an optical scanning angle of the scanning mirror 36.

In some embodiments, the drive coil 363 may be connected to a power supply through a conducting wire, and is configured to input an alternating drive current.

In some embodiments, the shape of the outer frame 3611c may be an oval ring (as shown in FIG. 14 to FIG.17). The oval ring-shaped outer frame is conducive to achieving a miniaturized resonant scanning mirror and further reducing costs. The drive coil 363 may also be disposed on the rear side of the outer frame 3611c, and form a circle around along a circumferential direction of the outer frame 3611c. The shape formed by the circling of the drive coil 363 is also an oval ring. A side that is of a magnet 362 and that encircles the movable part 3611 may be an arc surface. The arc surface is parallel to a corresponding arc segment of the drive coil 363 (that is, the arc segment opposite to the arc surface), thereby reducing the distance between the magnet 362 and the drive coil 363, enlarging the magnetic field applied to the surface of the drive coil 363, increasing the driving force, widening the deflection angle of the movable part 3611, and widening the optical scanning angle of the scanning mirror 36.

In some embodiments, the shape of the inner frame 3611a may be any one of:
a circle, a square, an oval, a rectangle, or a diamond.

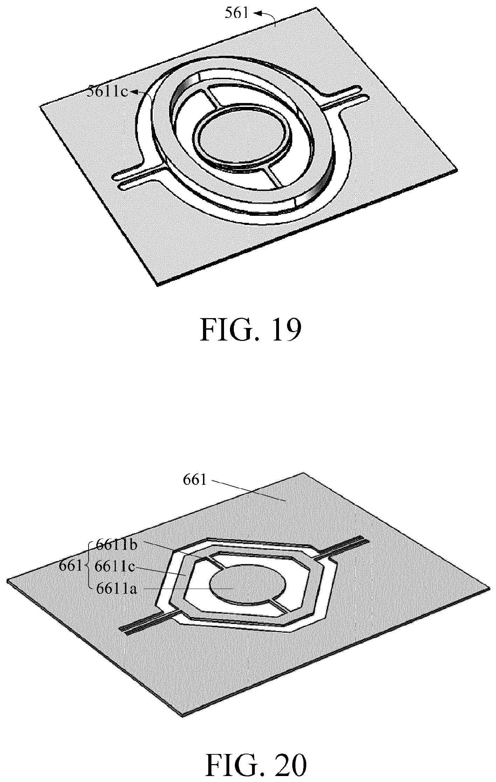

Referring to FIG. 19, FIG. 19 is a schematic structural diagram of a scanning substrate 561 of a scanning mirror according to another embodiment of the present invention. In some embodiments, the shape of the outer frame 5611c may be a circular ring. Accordingly, the shape formed by circling of the drive coil (not shown) on the outer frame 5611c may be a circular ring.

Referring to FIG. 20, FIG. 20 is a schematic structural diagram of a scanning substrate 661 of a scanning mirror according to another embodiment of the present invention. In some embodiments, the shape of the outer frame 6611c may be polygonal, and the drive coil (not shown) may be disposed on the outer frame 6611c and form a circle around along the circumferential direction of the outer frame 6611c. The shape formed by the circling of the drive coil is also polygonal. A side that is the magnet (not shown) and that encircles the movable part 6611 may be a plane, and the plane is parallel to a side of the polygonal drive coil (that is, the side opposite to the plane). Specifically, the shape of the outer frame 6611c may be octagonal, and the shape of the drive coil may also be octagonal. Compared to the oval outer frame, the octagonal outer frame 6611c can further reduce distortion of a scanned pattern and improve scanning performance.

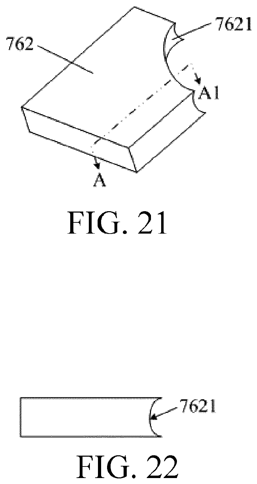

Referring to FIG. 21 and FIG. 22, FIG. 21 is a stereoscopic schematic structural diagram of a magnet 762 of a scanning mirror according to another embodiment of the present invention, and FIG. 22 is a cross-sectional view of the magnet 762 in the embodiment shown in FIG. 21 sectioned along an A-A1 line in FIG. 21 according to the present invention.

The magnets 762 may be applied to the scanning mirror 36 in the embodiment shown in FIG. 14 to FIG. 17. With reference to FIG. 14 to FIG. 17, in some embodiments, on a side 7621 that is of each magnet 762 and that encircles the drive coil 363, a cross section of the magnet along a thickness direction of the scanning substrate 361 may be an arc, and a center of the arc is recessed toward an interior of the magnet 762. In this way, the magnet 762 is not only disposed around the drive coil 363 along a horizontal direction (that is, along the surface direction of the scanning substrate 361), but also disposed around the drive coil 363 along a vertical direction (that is, along the thickness direction of the scanning substrate 361), thereby further reducing the distance between the magnet 762 and the drive coil 363, and further enhancing the magnetic field.

The following describes the working principles of the scanning mirror by using the scanning mirror 36 in the embodiment shown in FIG. 14 to FIG. 17 as an example: When a drive current runs in the drive coil 36, an in-plane current of the drive coil 36 interacts with an in-plane magnetic field B to generate an out-of-plane ampere force. The current across each scanning axis runs in a reverse direction, that is, the direction of the ampere force across the scanning axis is reversed, thereby generating a torque that is in plane and perpendicular to the magnetic field. The torque may generate a response on the two torsion shafts simultaneously. The resonance of one of the torsion shafts may be selectively excited according to frequency composition of the torque. For example, when a frequency component of the torque is consistent with a resonance frequency of the first torsion shaft 3612, vibration of the first torsion shaft 3612 will be amplified to generate a wide-angle torsion and drive the inner frame 3611a to rotate, and generate a resonance mode along a first direction. When the frequency component of the torque is consistent with a resonance frequency of a second torsion shaft 3611b, vibration of the second torsion shaft 3611b will be amplified to generate a wide-angle torsion and drive the inner frame 3611a to rotate, and generate a resonance mode along a second direction. The first direction is perpendicular to the second direction, so as to implement two-dimensional scanning of the scanning mirror 36.

Generally, due to the large mass of the outer frame 3611c and low vibration frequency, the first torsion shaft 3612 may be used as a slow scanning axis. Due to the high vibration frequency of the inner frame 3611a, the second torsion shaft 3611b may be used as a quick scanning axis. Because a relatively large frequency difference exists between the quick scanning axis and the slow scanning axis, raster scanning can be implemented.

In some embodiments, the drive coil 363 on the outer frame 3611c may be formed by circling of a multi-turn coil. In other embodiments, the drive coil 363 may also include multiple discrete conducting wires. For example, the drive coil may include a first conducting wire that is located on two opposite sides on the surface of the outer frame and parallel to the first torsion shaft and that is configured to control the outer frame to rotate around the first torsion shaft, and may further include a second conducting wire that is located on two opposite sides on the surface of the outer frame and parallel to the second torsion shaft and that is configured to control the outer frame to rotate around the second torsion shaft. Raster scanning is implemented by controlling the direction of the current applied to the first conducting wire and the second conducting wire and the time of electrification.

In some embodiments, the first torsion shaft 3612 and the second torsion shaft 3611b may be rigid torsion arms, and the torsion arms may be linear. In other embodiments, the first torsion shaft and the second torsion shaft may also be flexible connection parts such as springs, and the first torsion shaft and the second torsion shaft may also be serpentine beams or arched beams.

An embodiment of the present invention further provides a vehicle, including a vehicle body and the lidar system that is described in the foregoing embodiment of the present invention. The lidar system is mounted on the vehicle body and is configured to detect information on an obstacle in a three-dimensional space around the vehicle.

Specifically, the lidar system may be installed on the top of the vehicle. The information on the obstacle may include information such as a distance, speed, or orientation of the obstacle.

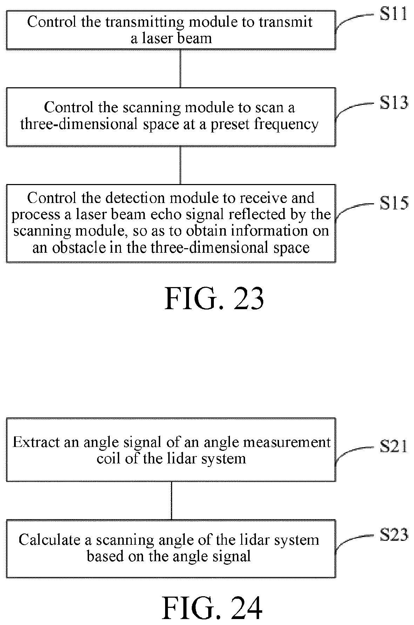

An embodiment of the present invention further provides a method for controlling the lidar system that is described in the foregoing embodiment of the present invention. Referring to FIG. 23, FIG. 23 is a flowchart of a method for controlling a lidar system according to an embodiment of the present invention. The control method may include: S11: controlling the transmitting module to transmit a laser beam; S13: controlling the scanning module to scan a three-dimensional space at a preset frequency; and S15: controlling the detection module to receive and process a laser beam echo signal reflected by the scanning module, so as to obtain information on an obstacle in the three-dimensional space.

In some embodiments, the controlling the scanning module to scan a three-dimensional space at a preset frequency includes: controlling the scanning module to rotate or swing at a preset frequency to change the direction of the laser beam that it reflects into the three-dimensional space.

In some embodiments, the scanning module includes a movable part and a driving part. The driving part includes a magnet assembly and a drive coil. The magnet assembly is configured to generate a magnetic field in a plane where the drive coil is located. The drive coil is coupled to the movable part, and therefore, the controlling the scanning module to rotate or swing at a preset frequency includes: inputting an alternating current of a preset frequency to the drive coil.

The method for controlling the lidar system according to this embodiment of the present invention can cost-effectively implement large-aperture wide-angle space scanning and also receive the laser beam echo signal reflected by a space obstacle.

An embodiment of the present invention provides a computer-readable storage medium, on which a computer instruction is stored. When executed, the computer instruction performs the steps of the control method.

An embodiment of the present invention provides a system, including a memory and a processor. The memory stores a computer instruction executable on the processor. When running the computer instruction, the processor performs the steps of the control method.

An embodiment of the present invention further provides a method for obtaining a scanning angle of a lidar system.

Referring to FIG. 24, FIG. 24 is a flowchart of a method for obtaining a scanning angle of a lidar system according to an embodiment of the present invention. The obtaining method may include: S21. extracting an angle signal of an angle measurement coil of the lidar system; and S23: calculating a scanning angle of the lidar system based on the angle signal.

In specific implementation, the scanning angle of the lidar system may be calculated based on a difference between the angle signal and a reference signal.

By applying the above method, the scanning performance of the lidar system can be better evaluated.

An embodiment of the present invention provides a computer-readable storage medium, on which a computer instruction is stored. When executed, the computer instruction performs the steps of the method for obtaining a scanning angle of a lidar system.

An embodiment of the present invention provides a system including a memory and a processor. The memory stores a computer instruction executable on the processor, and the processor executes the computer instruction to perform the steps of the method for obtaining a scanning angle of a lidar system.

A person of ordinary skill in the art may understand that all or some of the steps of the methods in the embodiments may be implemented by a program instructing relevant hardware. The program may be stored in a computer readable storage medium. The storage medium may include: a ROM, a RAM, a magnetic disk, or an optical disc.

## Claims

1. A lidar system (10, 30), comprising:
a light source (111, 311), an optical transmission module (112, 312), a scanning module (12, 22, 32), and a detection module (13, 33), wherein the light source (111, 311), the optical transmission module (112, 312), and the scanning module (12, 22, 32) are sequentially arranged along a first optical path; the scanning module (12, 22, 32), the optical transmission module (112, 312), and the detection module (13, 33) are sequentially arranged along a second optical path;
wherein in the first optical path, the light source (111, 311) is configured to transmit a laser beam, the optical transmission module (112, 312) is configured to transmit the laser beam, which is transmitted by the light source (111, 311), to the scanning module (12, 22, 32), and the scanning module (12, 22, 32) is configured to reflect the laser beam, which is transmitted by the optical transmission module (112, 312), to a three-dimensional space, and is configured to change a direction of the laser beam thereby reflected to the three-dimensional space, so as to scan the three-dimensional space; and
wherein in the second optical path, the scanning module (12, 22, 32) is configured to reflect an echo signal of the laser beam to the optical transmission module (112, 312), and the optical transmission module (112, 312) is configured to reflect the echo signal of the laser beam, which is reflected by the scanning module (12, 22, 32), to the detection module (13, 33), the detection module (13, 33) is configured to receive and process the echo signal of the laser beam that is reflected by the optical transmission module (112, 312), to obtain information on an obstacle (18) in the three-dimensional space, and the echo signal of the laser beam is formed by the obstacle (18) in three-dimensional space by reflecting the laser beam reflected by the scanning module (12, 22, 32),
**characterized in that**
the optical transmission module (112, 312) comprises:
a support body (1121, 316), wherein an optical channel (316a, 316b) is set in the support body (1121, 316); and
a plurality of transmission submodules (1122), wherein the plurality of transmission submodules (1122) is disposed on the support body (1121, 316) and is sequentially arranged along the optical channel (316a, 316b), and is configured to transmit a beam along a preset optical path defined by the optical channel (316a, 316b).

2. The lidar system according to claim 1, wherein a part of the first optical path is parallel or coaxial with a part of the second optical path.

3. The lidar system (10, 30) according to claim 1, wherein the support body (1121, 316) has a first end (3161), a second end (3162), a third end (3163), a first optical channel (316a) connecting the first end (3161) with the second end (3162), and a second optical channel (316b) connecting the second end (3162) with the third end (3163); and
the optical transmission module (112, 312) comprises a first transmission submodule (1122, 313), a second transmission submodule (1122, 314), and a third transmission submodule (1122, 315) that are disposed at the first end (3161), the second end (3162), and the third end (3163) respectively.

4. The lidar system (10, 30) according to claim 3, wherein the first transmission submodule (1122, 313) is perpendicular to the first optical channel (316a), the second transmission submodule (1122, 314) is disposed at a 45° angle against the first optical channel (316a) and the second optical channel (316b) separately, the third transmission submodule (1122, 315) is disposed at a 45° angle against the second optical channel (316b), and the first optical channel (316a) is perpendicular to the second optical channel (316b).

5. The lidar system (10, 30) according to claim 3 or 4, wherein:
- the first transmission submodule (1122, 313) is a collimation module (313), and is configured to adjust the laser beam, which is transmitted by the light source (111, 311), to a parallel laser beam;
- the second transmission submodule (1122, 314) is a reflection module (314), and is configured to reflect the parallel laser beam adjusted by the collimation module (313); and
- the third transmission submodule (1122, 315) is an optical splitting module (315), and is configured to allow transmission of the parallel laser beam reflected by the reflection module (314) and reflect an echo signal of the parallel laser beam.

6. The lidar system (10, 30) according to claim 1, wherein the optical channel comprises a through-hole, and the through-hole is filled with air or a transparent medium.

7. The lidar system (10, 30) according to claim 1, further comprising a housing for accommodating the light source (111, 311), the optical transmission module (112, 312), the scanning module (12, 22, 32), and the detection module (13, 33),
wherein the light source (111, 311) is disposed in a head space of the housing, and
wherein the light source (111, 311) is in contact with a top inner surface of the housing.

8. The lidar system (10, 30) according to claim 1 or claim 7, wherein heat dissipation parts are disposed around the light source (111, 311).

9. The lidar system (10, 30) according to claim 1, wherein the scanning module (12, 22, 32) comprises:
a movable part, configured to reflect the laser beam, which is transmitted by the optical transmission module (112, 312), to the three-dimensional space, and change, by rotating or swinging, a direction of the laser beam thereby reflected to the three-dimensional space; and
a driving part, configured to drive the movable part to rotate or swing,
wherein
the driving part comprises a magnet assembly and a drive coil, wherein the magnet assembly is configured to generate a magnetic field, the magnetic field has a magnetic field component on a plane wherein the drive coil is located; and the drive coil is coupled to the movable part and is configured to rotate or swing under a force in the magnetic field when a drive current is input, and drive the movable part to rotate or swing.

10. The lidar system (10, 30) according to claim 9, wherein the scanning module (12, 22, 32) comprises a scanning substrate and the driving part; wherein
the scanning substrate comprises a first torsion shaft, a support part, and the movable part, and the movable part is coupled to the support part through the first torsion shaft and is configured to rotate or swing around the first torsion shaft,
wherein preferably:
the magnet assembly comprises a magnet disposed on at least one side of the scanning substrate along a thickness direction thereof, and a preset distance exists between the magnet and the movable part,
wherein further preferably:
the magnet assembly comprises magnets disposed oppositely on two sides of the scanning substrate along a thickness direction thereof, and magnetic pole directions of the opposite magnets are opposite to each other; magnets located on the same side of the scanning substrate are discretely disposed on two sides of the first torsion shaft, and magnetic pole directions of the magnets located on the two sides of the first torsion shaft are opposite to each other.

11. The lidar system (10, 30) according to claim 10, wherein the magnet assembly further comprises a magnetically permeable sheet disposed on at least one side of the scanning substrate, and the magnets located on the at least one side of the scanning substrate are disposed between the magnetically permeable sheet and the scanning substrate,
or
wherein the magnets on the same side of the scanning substrate comprise two magnets that are centrosymmetrically disposed around the movable part, the drive coil is disposed on the movable part and disposed along a circumferential direction of the movable part, and a length of each magnet along the circumferential direction of the movable part is greater than or equal to 1/4 of a circumference of the drive coil and less than 1/2 of the circumference of the drive coil.

12. The lidar system (10, 30) according to claim 1, wherein the detection module (13, 33) comprises:
a filtering submodule, configured to filter out an optical signal that has a wavelength beyond a preset wavelength range and that is among laser beam echo signals reflected by the optical transmission module (112, 312);
a convergence module, configured to converge laser beam echo signals filtered by the filtering submodule; and
a detection submodule, configured to receive and process the laser beam echo signals converged by the convergence module, so as to obtain information on the obstacle (18),
wherein preferably the detection submodule comprises a photosensor and an optical concentrator coupled to the photosensor, and the optical concentrator is configured to widen an angle range of incident light collected by the photosensor.

13. A vehicle, comprising a vehicle body, and the lidar system (10, 30) according to any one of claims 1 to 12, wherein the lidar system (10, 30) is mounted on the vehicle body and is configured to detect information on an obstacle (18) in a three-dimensional space around the vehicle.

14. A method for controlling a lidar system (10, 30) according to any one of claims 1 to 12, comprising:
controlling the transmitting module to transmit a laser beam;
controlling the scanning module (12, 22, 32) to scan a three-dimensional space at a preset frequency; and
controlling the detection module (13, 33) to receive and process a laser beam echo signal reflected by the scanning module (12, 22, 32), so as to obtain information on an obstacle (18) in the three-dimensional space.

## Patentansprüche

1. Lidarsystem (10, 30), aufweisend:
eine Lichtquelle (111, 311), ein optisches Übertragungsmodul (112, 312), ein Abtastmodul (12, 22, 32) und ein Erkennungsmodul (13, 33), wobei die Lichtquelle (111, 311), das optische Übertragungsmodul (112, 312) und das Abtastmodul (12, 22, 32) sequenziell entlang eines ersten Strahlengangs angeordnet sind;
und das Abtastmodul (12, 22, 32), das optische Übertragungsmodul (112, 312) und das Erkennungsmodul (13, 33) sequenziell entlang eines zweiten Strahlengangs angeordnet sind;
wobei in dem ersten Strahlengang die Lichtquelle (111, 311) eingerichtet ist, um einen Laserstrahl zu übertragen, das optische Übertragungsmodul (112, 312) eingerichtet ist, um den Laserstrahl, der durch die Lichtquelle (111, 311) übertragen wird, an das Abtastmodul (12, 22, 32) zu übertragen, und das Abtastmodul (12, 22, 32) eingerichtet ist, um den Laserstrahl, der durch das optische Übertragungsmodul (112, 312) übertragen wird, in einen dreidimensionalen Raum zu reflektieren, und eingerichtet ist, eine Richtung des Laserstrahls zu ändern, der dadurch in den dreidimensionalen Raum reflektiert wird, um den dreidimensionalen Raum abzutasten; und
wobei in einem zweiten Strahlengang das Abtastmodul (12, 22, 32) eingerichtet ist, ein Echosignal des Laserstrahls an das optische Übertragungsmodul (112, 312) zu reflektieren und das optische Übertragungsmodul (112, 312) eingerichtet ist, das Echosignal des Laserstrahls, der durch das Abtastmodul (12, 22, 32) reflektiert wird, an das Erkennungsmodul (13, 33) zu reflektieren, und das Erkennungsmodul (13, 33) eingerichtet ist, um das Echosignal des Laserstrahls, der durch das optische Übertragungsmodul (112, 312) reflektiert wird, zu empfangen und zu verarbeiten, um Informationen zu einem Hindernis (18) in dem dreidimensionalen Raum zu erhalten, und das Echosignal des Laserstrahls durch das Hindernis (18) in dem dreidimensionalen Raum gebildet wird, indem der durch das Abtastmodul (12, 22, 32) reflektierte Laserstrahl reflektiert wird,
**dadurch gekennzeichnet, dass** das optische Übertragungsmodul (112, 312) aufweist:
einen Trägerkörper (1121, 316), wobei ein optischer Kanal (316a, 316b) in den Trägerkörper (1121, 316) eingesetzt ist; und
mehrere Übertragungssubmodule (1122), wobei die mehreren Übertragungssubmodule (1122) an dem Trägerkörper (1121, 316) angeordnet und sequenziell entlang des optischen Kanals (316a, 316b) angeordnet sind, und eingerichtet sind, um einen Strahl entlang eines vorgegebenen Strahlengangs zu übertragen, der durch den optischen Kanal (316a, 316b) definiert ist.

2. Lidarsystem nach Anspruch 1, wobei ein Abschnitt des ersten Strahlengangs parallel oder koaxial zu einem Abschnitt des zweiten Strahlengangs ist.

3. Lidarsystem (10, 30) nach Anspruch 1, wobei der Trägerkörper (1121, 316) ein erstes Ende (3161), ein zweites Ende (3162), ein drittes Ende (3163), einen ersten optischen Kanal (316a), der das erste Ende (3161) mit dem zweiten Ende (3162) verbindet, und einen zweiten optischen Kanal (316b), der das zweite Ende (3162) mit dem dritten Ende (3163) verbindet, aufweist; und
das optische Übertragungsmodul (112, 312) ein erstes Übertragungssubmodul (1122, 313), ein zweites Übertragungssubmodul (1122, 314) und ein drittes Übertragungssubmodul (1122, 315) aufweist, die jeweils an dem ersten Ende (3161), dem zweiten Ende (3162) und dem dritten Ende (3163) angeordnet sind.

4. Lidarsystem (10, 30) nach Anspruch 3, wobei das erste Übertragungssubmodul (1122, 313) senkrecht zu dem ersten optischen Kanal (316a) steht, das zweite Übertragungssubmodul (1122, 314) separat in einem 45°-Winkel zu dem ersten optischen Kanal (316a) und dem zweiten optischen Kanal (316b) angeordnet ist und das dritte Übertragungssubmodul (1122, 315) in einem 45°-Winkel zu dem zweiten optischen Kanal (316b) angeordnet ist, und der erste optische Kanal (316a) senkrecht zu dem zweiten optischen Kanal (316b) steht.

5. Lidarsystem (10, 30) nach Anspruch 3 oder 4, wobei:
- das erste Übertragungssubmodul (1122, 313) ein Kollimationsmodul (313) ist und eingerichtet ist, um den Laserstrahl, der durch die Lichtquelle (111, 311) übertragen wird, auf einen parallelen Laserstrahl anzupassen;
- das zweite Übertragungssubmodul (1122, 314) ein Reflektionsmodul (314) ist und eingerichtet ist, um den parallelen Laserstrahl, der durch das Kollimationsmodul (313) angepasst wurde, zu reflektieren; und
- das dritte Übertragungssubmodul (1122, 315) ein optisches Splittingmodul (315) ist und eingerichtet ist, um die Übertragung des parallelen Laserstrahls zu erlauben, der durch das Reflektionsmodul (314) reflektiert wird, und ein Echosignal des parallelen Laserstrahls zu reflektieren.

6. Lidarsystem (10, 30) nach Anspruch 1, wobei der optische Kanal ein Durchgangsloch aufweist und das Durchgangsloch mit Luft oder mit einem transparenten Medium gefüllt ist.

7. Lidarsystem (10, 30) nach Anspruch 1, ferner aufweisend ein Gehäuse zum Aufnehmen der Lichtquelle (111, 311), des optischen Übertragungsmoduls (112, 312), des Abtastmoduls (12, 22, 32) und des Erkennungsmoduls (13, 33),
wobei die Lichtquelle (111, 311) in dem Kopfraum des Gehäuses angeordnet ist und
wobei die Lichtquelle (111, 311) mit einer oberen inneren Fläche des Gehäuses in Kontakt steht.

8. Lidarsystem (10, 30) nach Anspruch 1 oder Anspruch 7, wobei Wärmeableitungsabschnitte um die Lichtquelle (111, 311) herum angeordnet sind.

9. Lidarsystem (10, 30) nach Anspruch 1, wobei das Abtastmodul (12, 22, 32) aufweist:
einen beweglichen Abschnitt, eingerichtet, um den Laserstrahl, der durch das optische Übertragungsmodul (112, 312) übertragen wird, in den dreidimensionalen Raum zu reflektieren und durch Drehen oder Schwingen eine Richtung des Laserstrahls zu ändern, der dadurch in den dreidimensionalen Raum reflektiert wird; und
einen Antriebsabschnitt, eingerichtet, um den beweglichen Abschnitt anzutreiben, sich zu drehen oder zu schwingen,
wobei
der Antriebsabschnitt eine Magnetbaugruppe und eine Antriebsspule aufweist, wobei die Magnetbaugruppe eingerichtet ist, um ein Magnetfeld zu erzeugen, das Magnetfeld eine Magnetfeldkomponente auf einer Ebene aufweist, in der die Antriebsspule platziert ist; und die Antriebsspule mit dem beweglichen Abschnitt gekoppelt und eingerichtet ist, sich unter einer Kraft in dem Magnetfeld zu drehen oder zu schwingen, wenn ein Antriebsstrom zugeführt wird, und den beweglichen Abschnitt anzutreiben, sich zu drehen oder zu schwingen.

10. Lidarsystem (10, 30) nach Anspruch 9, wobei das Abtastmodul (12, 22, 32) ein Abtastsubstrat und den Antriebsabschnitt aufweist; wobei
das Abtastsubstrat eine erste Torsionswelle, einen Trägerabschnitt und den beweglichen Abschnitt aufweist und der bewegliche Abschnitt durch die erste Torsionswelle mit dem Trägerabschnitt gekoppelt ist und eingerichtet ist, sich um die erste Torsionswelle zu drehen oder zu schwingen,
wobei bevorzugt:
die Magnetbaugruppe einen Magneten aufweist, der an mindestens einer Seite des Abtastsubstrats entlang einer Dickerichtung davon angeordnet ist, und eine vorgegebene Entfernung zwischen dem Magneten und dem beweglichen Abschnitt vorliegt,
wobei ferner bevorzugt:
die Magnetbaugruppe Magneten aufweist, die entgegengesetzt an zwei Seiten des Abtastsubstrats entlang einer Dickerichtung davon angeordnet sind und Magnetpolrichtungen der entgegengesetzten Magneten zueinander entgegengesetzt sind;
Magneten, die auf derselben Seite des Abtastsubstrats platziert sind, sind diskret an zwei Seiten der ersten Torsionswelle angeordnet, und Magnetpolrichtungen der Magneten, die an den beiden Seiten der ersten Torsionswelle platziert sind, sind zueinander entgegengesetzt angeordnet.

11. Lidarsystem (10, 30) nach Anspruch 10, wobei die Magnetbaugruppe ferner ein magnetisch durchlässiges Blech aufweist, das auf mindestens einer Seite des Abtastsubstrats angeordnet ist und die Magneten, die an der mindestens einen Seite des Abtastsubstrats platziert sind, zwischen dem magnetisch durchlässigen Blech und dem Abtastsubstrat angeordnet sind, oder
wobei die Magneten auf derselben Seite des Abtastsubstrats zwei Magneten aufweisen, die mittensymmetrisch um den beweglichen Abschnitt herum angeordnet sind, die Antriebsspule an dem beweglichen Abschnitt angeordnet ist und entlang einer Umfangsrichtung des beweglichen Abschnitts angeordnet ist, und eine Länge jedes Magneten entlang der Umfangsrichtung des beweglichen Abschnitts größer oder gleich 1/4 eines Umfangs der Antriebsspule und weniger als 1/2 des Umfangs der Antriebsspule ist.

12. Lidarsystem (10, 30) nach Anspruch **1,** wobei das Erkennungsmodul (13, 33) aufweist:
ein Filtersubmodul, eingerichtet, um ein optisches Signal auszufiltern, das eine Wellenlänge aufweist, die über einen vorgegebenen Wellenlängenbereich hinausgeht und die zu Laserstrahlechosignalen gehört, die durch das optische Übertragungsmodul (112, 312) reflektiert werden;
ein Konvergenzmodul, eingerichtet, um Laserstrahlechosignals zusammenzuführen, die durch das Filtersubmodul gefiltert wurden; und
ein Erkennungssubmodul, eingerichtet, um die Laserstrahlechosignals, die durch das Konvergenzmodul zusammengeführt wurden, zu empfangen und zu verarbeiten, um Informationen zu dem Hindernis (18) zu erhalten,
wobei bevorzugt das Erkennungssubmodul einen Fotosensor und einen optischen Konzentrator aufweist, der mit dem Fotosensor gekoppelt ist, und der optische Konzentrator eingerichtet ist, einen Winkelbereich des einfallenden Lichts aufzuweiten, das durch den Fotosensor erfasst wird.

13. Fahrzeug, aufweisend einen Fahrzeugkörper, und das Lidarsystem (10, 30) nach einem der Ansprüche 1 bis 12, wobei das Lidarsystem (10, 30) an dem Fahrzeugkörper montiert ist und eingerichtet ist, Informationen zu einem Hindernis (18) in einem dreidimensionalen Raum um das Fahrzeug herum zu erfassen.

14. Verfahren zum Steuern eines Lidarsystems (10, 30) nach einem der Ansprüche 1 bis 12, umfassend:
Steuern des Übertragungsmoduls zum Übertragen eines Laserstrahls;
Steuern des Abtastmoduls (12, 22, 32) zum Abtasten eines dreidimensionalen Raums bei einer vorgegebenen Frequenz; und
Steuern des Erkennungsmoduls (13, 33) zum Empfangen und Verarbeiten eines Laserstrahlechosignals, das durch das Abtastmodul (12, 22, 32) reflektiert wird, um Informationen zu einem Hindernis (18) in dem dreidimensionalen Raum zu erhalten.

## Revendications

1. Système lidar (10, 30), comprenant :
une source lumineuse (111, 311), un module de transmission optique (112, 312), un module de balayage (12, 22, 32) et un module de détection (13, 33), dans lesquels la source lumineuse (111, 311), le module de transmission optique (112, 312) et le module de balayage (12, 22, 32) sont agencés séquentiellement le long d'un premier trajet optique ; et le module de balayage (12, 22, 32), le module de transmission optique (112, 312) et le module de détection (13, 33) sont agencés séquentiellement le long d'un deuxième trajet optique ;
dans lequel, dans le premier trajet optique, la source lumineuse (111, 311) est configurée pour transmettre un faisceau laser, le module de transmission optique (112, 312) est configuré pour transmettre le faisceau laser, qui est transmis par la source lumineuse (111, 311), au module de balayage (12, 22, 32), et le module de balayage (12, 22, 32) est configuré pour réfléchir le faisceau laser, qui est transmis par le module de transmission optique (112, 312), vers un espace tridimensionnel, et est configuré pour modifier une direction du faisceau laser ainsi réfléchi vers l'espace tridimensionnel, de manière à balayer l'espace tridimensionnel ; et
dans lequel, dans le deuxième trajet optique, le module de balayage (12, 22, 32) est configuré pour réfléchir un signal d'écho du faisceau laser vers le module de transmission optique (112, 312), et le module de transmission optique (112, 312) est configuré pour réfléchir le signal d'écho du faisceau laser, qui est réfléchi par le module de balayage (12, 22, 32), vers le module de détection (13, 33), le module de détection (13, 33) est configuré pour recevoir et traiter le signal d'écho du faisceau laser qui est réfléchi par le module de transmission optique (112, 312), afin d'obtenir des informations sur un obstacle (18) dans l'espace tridimensionnel, et le signal d'écho du faisceau laser est formé par l'obstacle (18) dans l'espace tridimensionnel en réfléchissant le faisceau laser réfléchi par le module de balayage (12, 22, 32),
**caractérisé en ce que** le module de transmission optique (112, 312) comprend :
un corps de support (1121, 316), dans lequel un canal optique (316a, 316b) est défini dans le corps de support (1121, 316) ; et
une pluralité de sous-modules de transmission (1122), dans laquelle la pluralité de sous-modules de transmission (1122) est disposée sur le corps de support (1121, 316) et est agencée séquentiellement le long du canal optique (316a, 316b), et est configurée pour transmettre un faisceau le long d'un trajet optique prédéfini qui est défini par le canal optique (316a, 316b).

2. Système lidar selon la revendication 1, dans lequel une partie du premier trajet optique est parallèle ou coaxiale à une partie du deuxième trajet optique.

3. Système lidar (10, 30) selon la revendication 1, dans lequel le corps de support (1121, 316) présente une première extrémité (3161), une deuxième extrémité (3162), une troisième extrémité (3163), un premier canal optique (316a) reliant la première extrémité (3161) à la deuxième extrémité (3162), et un deuxième canal optique (316b) reliant la deuxième extrémité (3162) à la troisième extrémité (3163) ; et
le module de transmission optique (112, 312) comprend un premier sous-module de transmission (1122, 313), un deuxième sous-module de transmission (1122, 314) et un troisième sous-module de transmission (1122, 315) qui sont disposés respectivement à la première extrémité (3161), la deuxième extrémité (3162) et la troisième extrémité (3163), respectivement.

4. Système lidar (10, 30) selon la revendication 3, dans lequel le premier sous-module de transmission (1122, 313) est perpendiculaire au premier canal optique (316a), le deuxième sous-module de transmission (1122, 314) est disposé à un angle de 45° par rapport au premier canal optique (316a) et au deuxième canal optique (316b), séparément, le troisième sous-module de transmission (1122, 315) est disposé à un angle de 45° par rapport au deuxième canal optique (316b), et le premier canal optique (316a) est perpendiculaire au deuxième canal optique (316b).

5. Système lidar (10, 30) selon la revendication 3 ou 4, dans lequel :
- le premier sous-module de transmission (1122, 313) est un module de collimation (313) et est configuré pour ajuster le faisceau laser, qui est transmis par la source lumineuse (111, 311), en un faisceau laser parallèle ;
- le deuxième sous-module de transmission (1122, 314) est un module de réflexion (314) et est configuré pour réfléchir le faisceau laser parallèle ajusté par le module de collimation (313) ; et
- le troisième sous-module de transmission (1122, 315) est un module de séparation optique (315) et est configuré pour permettre la transmission du faisceau laser parallèle réfléchi par le module de réflexion (314) et pour réfléchir un signal d'écho du faisceau laser parallèle.

6. Système lidar (10, 30) selon la revendication 1, dans lequel le canal optique comprend un trou traversant, et le trou traversant est rempli d'air ou d'un milieu transparent.

7. Système lidar (10, 30) selon la revendication 1, comprenant en outre un boîtier destiné à loger la source lumineuse (111, 311), le module de transmission optique (112, 312), le module de balayage (12, 22, 32) et le module de détection (13, 33),
dans laquelle la source lumineuse (111, 311) est disposée dans un espace libre du boîtier, et
dans laquelle la source lumineuse (111, 311) est en contact avec une surface intérieure supérieure du boîtier.

8. Système lidar (10, 30) selon la revendication 1 ou 7, dans lequel des parties de dissipation thermique sont disposées autour de la source lumineuse (111, 311).

9. Système lidar (10, 30) selon la revendication 1, dans lequel le module de balayage (12, 22, 32) comprend :
une partie mobile, configurée pour réfléchir le faisceau laser, qui est transmis par le module de transmission optique (112, 312), vers l'espace tridimensionnel, et pour modifier, par rotation ou oscillation, une direction du faisceau laser ainsi réfléchi vers l'espace tridimensionnel ; et
une partie d'entraînement, configurée pour entraîner la partie mobile en rotation ou en oscillation,
dans laquelle
la partie d'entraînement comprend un ensemble aimant et une bobine d'excitation, dans lequel l'ensemble aimant est configuré pour générer un champ magnétique, le champ magnétique présente une composante de champ magnétique sur un plan dans lequel la bobine d'excitation est située ; et la bobine d'excitation est couplée à la partie mobile et est configurée pour tourner ou osciller sous l'effet d'une force dans le champ magnétique lorsqu'un courant d'excitation est appliqué en entrée, et pour entraîner la partie mobile en rotation ou en oscillation.

10. Système lidar (10, 30) selon la revendication 9, dans lequel le module de balayage (12, 22, 32) comprend un substrat de balayage et la partie d'entraînement ; dans lequel
le substrat de balayage comprend un premier arbre de torsion, une partie de support et la partie mobile, et la partie mobile est couplée à la partie de support par l'intermédiaire du premier arbre de torsion et est configurée pour tourner ou osciller autour du premier arbre de torsion,
dans lequel, de préférence :
l'ensemble aimant comprend un aimant disposé sur au moins un côté du substrat de balayage dans la direction d'épaisseur de celui-ci, et une distance prédéfinie existe entre l'aimant et la partie mobile,
dans lequel, de préférence :
l'ensemble aimant comprend des aimants disposés de manière opposée sur deux côtés du substrat de balayage le long d'une direction d'épaisseur de celui-ci, et les directions des pôles magnétiques des aimants opposés sont opposées les unes aux autres ; les aimants situés sur le même côté du substrat de balayage sont disposés de manière discrète sur deux côtés du premier arbre de torsion, et les directions des pôles magnétiques des aimants situés sur les deux côtés du premier arbre de torsion sont opposées les unes aux autres.

11. Système lidar (10, 30) selon la revendication 10, dans lequel l'ensemble aimant comprend en outre une feuille magnétiquement perméable disposée sur au moins un côté du substrat de balayage, et les aimants situés sur l'au moins un côté du substrat de balayage sont disposés entre la feuille magnétiquement perméable et le substrat de balayage, ou
dans lequel les aimants situés sur le même côté du substrat de balayage comprennent deux aimants qui sont disposés de manière centrosymétrique autour de la partie mobile, la bobine d'excitation est disposée sur la partie mobile et disposée le long d'une direction circonférentielle de la partie mobile, et une longueur de chaque aimant le long de la direction circonférentielle de la partie mobile est supérieure ou égale à 1/4 d'une circonférence de la bobine d'excitation et inférieure à 1/2 de la circonférence de la bobine d'excitation.

12. Système lidar (10, 30) selon la revendication 1, dans lequel le module de détection (13, 33) comprend :
un sous-module de filtrage, configuré pour filtrer un signal optique qui présente une longueur d'onde se situant au-delà d'une plage de longueurs d'onde prédéfinie et qui est parmi les signaux d'écho de faisceau laser réfléchis par le module de transmission optique (112, 312) ;
un module de convergence, configuré pour faire converger les signaux d'écho de faisceau laser filtrés par le sous-module de filtrage ; et
un sous-module de détection, configuré pour recevoir et traiter les signaux d'écho de faisceau laser convergés par le module de convergence, de manière à obtenir des informations sur l'obstacle (18),
dans lequel, de préférence, le sous-module de détection comprend un photodétecteur et un concentrateur optique couplé au photodétecteur, et le concentrateur optique est configuré pour élargir une plage angulaire de la lumière incidente collectée par le photodétecteur.

13. Véhicule comprenant une carrosserie de véhicule et le système lidar (10, 30) selon l'une quelconque des revendications 1 à 12, dans lequel le système lidar (10, 30) est monté sur la carrosserie de véhicule et est configuré pour détecter des informations sur un obstacle (18) dans un espace tridimensionnel autour du véhicule.

14. Procédé de commande d'un système lidar (10, 30) selon l'une quelconque des revendications 1 à 12, comprenant le fait de :
commander le module de transmission en vue d'émettre un faisceau laser ;
commander le module de balayage (12, 22, 32) en vue de balayer un espace tridimensionnel à une fréquence prédéfinie ; et
commander le module de détection (13, 33) en vue de recevoir et de traiter un signal d'écho de faisceau laser réfléchi par le module de balayage (12, 22, 32), de manière à obtenir des informations sur un obstacle (18) dans l'espace tridimensionnel.
